(19) Europäisches Patentamt
European Patent Office
Office européen des brevets

(11) EP 2 173 808 B1

(12) **FASCICULE DE BREVET EUROPEEN**

(45) Date de publication et mention de la délivrance du brevet:
**15.08.2012 Bulletin 2012/33**

(21) Numéro de dépôt: **08761241.2**

(22) Date de dépôt: **19.06.2008**

(51) Int Cl.:
***C08L 53/02*** *(2006.01)* ***C08G 81/02*** *(2006.01)*
***B60C 1/00*** *(2006.01)* ***C08C 19/44*** *(2006.01)*

(86) Numéro de dépôt international:
**PCT/EP2008/057816**

(87) Numéro de publication internationale:
**WO 2009/000752 (31.12.2008 Gazette 2009/01)**

(54) **PROCÉDÉ DE PRÉPARATION D'UN COPOLYMÈRE DIÉNIQUE À BLOC POLYÉTHER, COMPOSITION DE CAOUTCHOUC RENFORCÉE ET PNEUMATIQUE**

VERFAHREN ZUR HERSTELLUNG EINES DIENCOPOLYMERS MIT EINEM POLYETHERBLOCK, VERSTÄRKTE KAUTSCHUKZUSAMMENESETZUNG UND REIFEN

PROCESS FOR PREPARING A DIENE COPOLYMER HAVING A POLYETHER BLOCK, REINFORCED RUBBER COMPOSITION AND TYRE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **28.06.2007 FR 0704734**

(43) Date de publication de la demande:
**14.04.2010 Bulletin 2010/15**

(73) Titulaires:
- **COMPAGNIE GENERALE DES ETABLISSEMENTS MICHELIN**
  **63000 Clermont-Ferrand (FR)**
- **MICHELIN Recherche et Technique S.A.**
  **1763 Granges-Paccot (CH)**

(72) Inventeurs:
- **ROBERT, Pierre**
  **Greer, South Carolina 29650 (US)**
- **BARBOTIN, Fanny**
  **F-Grenoble 38100 (FR)**
- **FAVROT, Jean-Michel**
  **F-63800 Cournon d'Auvergne (FR)**
- **CHABOCHE, Philippe**
  **F-63000 Clermont-Ferrand (FR)**

(74) Mandataire: **Le Cam, Véronique Marie Christine**
**Manufacture Française des Pneumatiques Michelin**
**23 Place des Carmes-Déchaux**
**SGD/LG/PI - F35 - Ladoux**
**63040 Clermont-Ferrand Cedex (FR)**

(56) Documents cités:
**US-B2- 6 518 369**

- **VAN BUTSELE, K. ET AL VAN BUTSELE, K. ET AL: "Synthesis of Novel Amphiphilic and pH-Sensitive ABC Miktoarm Star Terpolymers Synthesis of Novel Amphiphilic and pH-Sensitive ABC Miktoarm Star Terpolymers" MACROMOLECULES , 39(17), 5652-5656 CODEN: MAMOBX; ISSN: 0024-9297 MACROMOLECULES , 39(17), 5652-5656 CODEN: MAMOBX; ISSN: 0024-9297, 2006, XP002467587**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 173 808 B1

## Description

La présente invention concerne un procédé de préparation d'un copolymère diénique à blocs comprenant au moins un bloc polyéther. Ce copolymère confère à une composition de caoutchouc renforcée le contenant des propriétés hystérétiques améliorées à l'état vulcanisé, ainsi que des propriétés de mise en oeuvre intéressantes à l'état cru. L'invention concerne également un pneumatique incorporant une telle composition.

Depuis que les économies de carburant et la nécessité de préserver l'environnement sont devenues une priorité, il est souhaitable de produire des mélanges possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la composition d'enveloppes de pneumatique, tels que par exemple des sous-couches, des flancs, des bandes de roulement, et afin d'obtenir des pneumatiques possédant une résistance au roulement réduite.

La réduction de l'hystérèse des mélanges est un objectif permanent qui doit toutefois se faire en conservant l'aptitude à la mise en oeuvre des mélanges.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation, de couplage ou d'étoilage dans le but d'obtenir une bonne interaction entre le polymère ainsi modifié et la charge, qu'il s'agisse du noir de carbone ou d'une charge inorganique renforçante.

Dans le cadre de mélange contenant une charge inorganique renforçante, il a été proposé d'utiliser des polymères diéniques fonctionnalisés à la place des polymères non fonctionnalisés qui étaient antérieurement utilisés, et en particulier des polymères fonctionnalisés par des dérivés alkoxysilanes.

A titre d'illustration de cet art antérieur relatif à des charges inorganiques renforçantes, on peut par exemple citer le brevet américain US-A-5 066 721, qui décrit une composition de caoutchouc comprenant un polymère diénique fonctionnalisé par un alkoxysilane ayant au moins un reste alkoxyle non hydrolysable en mélange avec de la silice.

Un inconvénient de ces réactions de fonctionnalisation par un dérivé alkoxysilane réside dans la mise en oeuvre ultérieure de l'opération de stripping à la vapeur d'eau, qui est nécessaire pour éliminer le solvant de polymérisation.

En effet, d'une manière générale, l'expérience montre que les polymères fonctionnalisés obtenus subissent des évolutions de macrostructure lors de cette opération de stripping, ce qui conduit à une sévère dégradation de leurs propriétés, à moins de se limiter à utiliser à titre d'agent de fonctionnalisation un alkoxysilane appartenant à une famille restreinte, telle que celle qui est décrite dans le document précité US-A-5 066 721.

C'est la raison pour laquelle des recherches ont été menées sur d'autres réactions de fonctionnalisation, toujours en vue de l'obtention de telles compositions de caoutchouc.

A titre d'exemple, on peut citer le brevet EP 0 778 311 B1 au nom de la demanderesse, qui divulgue l'incorporation à des compositions de caoutchouc comprenant à titre de charge renforçante de la silice à titre majoritaire, de polymères diéniques portant en extrémité de chaîne une fonction silanol ou un bloc polysiloxane ayant une extrémité silanol. On utilise par exemple un agent de fonctionnalisation constitué d'un polysiloxane cyclique, tel que l'hexaméthylcyclotrisiloxane. Les polymères fonctionnalisés obtenus peuvent être séparés du milieu réactionnel conduisant à leur formation par extraction à la vapeur d'eau du solvant, sans que leur macrostructure et, par conséquent, leurs propriétés physiques n'évoluent.

On a pu établir que ces polymères confèrent des propriétés de caoutchouterie, notamment hystérétiques et de renforcement à l'état réticulé, qui sont améliorées par rapport à celles de compositions témoins à base de polymères diéniques non fonctionnalisés, et qui sont au moins analogues à celles de compositions à base de polymères diéniques comprenant une fonction alkoxysilane.

Cependant, ces polymères, qui comportent un groupe fonctionnel silanol actif pour un couplage à de la silice ou à du noir de carbone modifié en surface par de la silice, bien que conférant aux compositions de caoutchouc les incorporant une amélioration des propriétés d'hystérèse et de renforcement, induisent généralement une aptitude à la mise en oeuvre des mélanges non réticulés qui est pénalisée par rapport à celle de polymères " témoins " non fonctionnalisés.

On a donc recherché d'autres moyens de diminution de l'hystérèse qui permettent une meilleure mise en oeuvre des mélanges.

Le brevet EP 1 127 909 B1 au nom de la demanderesse divulgue un procédé de préparation et l'utilisation en composition de caoutchouc vulcanisable d'un copolymère à bloc polyéther en bout de chaîne. Ce copolymère est destiné à interagir avec la charge inorganique renforçante de manière à diminuer l'hystérèse du mélange. Le procédé de préparation de ce copolymère comprend une méthode de greffage du bloc polyéther complexe en trois étapes : la fonctionnalisation des extrémités de chaînes polymériques vivantes par un organosiloxane cyclique, la réaction du polymère vivant ainsi fonctionnalisé sur un dialkyldihalogénosilane puis la réaction de ce polymère fonctionnalisé Si-X (X étant un halogène) avec un polyéthylène glycol en présence de diméthylaminopyridine. Il apparaît que les propriétés d'hystérèse de la composition de caoutchouc comprenant le copolymère sont significativement améliorées par rapport à une

composition comprenant un élastomère non fonctionnel, tout en permettant une mise en oeuvre améliorée par rapport à une composition comprenant un élastomère fonctionnalisé en bout de chaîne par une fonction silanol.

Le brevet US 6,518,369 propose une composition de caoutchouc renforcée contenant un copolymère diénique à bloc polyéther, ainsi qu'un procédé de préparation dudit copolymère. La solution retenue consiste à faire réagir des chaînes vivantes d'élastomères diéniques sur un polyéther spécifique. Bien que proposant une amélioration du taux de greffage du polyéther sur les chaînes de polymère préparé en solution, ce taux reste insuffisant avec le procédé décrit dans ce brevet. Or, le rendement de greffage du bloc polyether est déterminant pour la qualité de l'interaction du copolymère à blocs avec la charge renforçante dans une composition de caoutchouc renforcée, et donc pour les propriétés mécaniques de cette composition.

Le but de la présente invention est donc de remédier à cet état de fait. Notamment, un objectif est de proposer un polymère diénique modifié de préparation simple et qui interagit de manière satisfaisante avec une charge renforçante d'une composition de caoutchouc le contenant afin d'améliorer les propriétés mécaniques de ladite composition.

Ce but est atteint en ce que la demanderesse vient de découvrir un procédé simplifié pour la préparation d'un copolymère diénique à blocs, dont l'un au moins de ses blocs est un polyéther, qui permet d'atteindre de manière inattendue un taux de greffage élevé du bloc polyéther sur les chaînes de polymère. Le copolymère préparé conformément au procédé selon l'invention est utilisable en composition de caoutchouc renforcée, notamment pour la fabrication d'enveloppes de pneumatiques, pour interagir avec la charge renforçante. Ce copolymère permet de réduire d'une manière significative pour la composition de caoutchouc le contenant, à l'état réticulé, le niveau d'hystérèse et, à l'état non réticulé, d'optimiser l'aptitude à la mise en oeuvre de cette composition.

En particulier, en prenant comme référence les hystérèses de compositions de caoutchouc " témoins " contenant des élastomères diéniques non fonctionnalisés ou encore fonctionnalisés en bout de chaîne par un silanol , une composition de caoutchouc contenant un copolymère à blocs selon l'invention est caractérisée par une hystérèse qui est plus réduite que celle qui est relative à ces compositions " témoins ", ainsi que par une mise en oeuvre améliorée par rapport aux compositions de caoutchouc " témoins " à base de polymère diénique fonctionnalisé en bout de chaîne.

L'invention a donc pour objet un procédé de préparation en une étape d'un copolymère diénique à blocs dont l'un au moins desdits blocs est constitué d'un polyéther et au moins un autre desdits blocs est constitué d'un élastomère diénique.

L'invention a également pour objet un copolymère diénique à blocs dont l'un au moins desdits blocs est constitué d'un polyéther et au moins un autre desdits blocs est constitué d'un élastomère diénique, susceptible d'être ou directement obtenu par le procédé selon l'invention.

Un autre objet de l'invention est une composition de caoutchouc comprenant ce copolymère diénique à blocs.

L'invention a aussi pour objet un pneumatique incorporant une telle composition.

Le procédé selon l'invention, permettant de préparer un copolymère diénique à blocs dont l'un au moins desdits blocs est constitué d'un polyéther et au moins un autre desdits blocs est constitué d'un élastomère diénique, consiste à faire réagir un premier réactif, constitué d'un élastomère diénique vivant avec un deuxième réactif, constitué d'un agent de fonctionnalisation de formule générale I ayant un bloc polyéther fonctionnel de masse moléculaire moyenne en nombre sensiblement de 100 à 5000 g/mol, de préférence de 150 à 3000 g/mol et plus préférentiellement de 300 à 2000 g/mol :

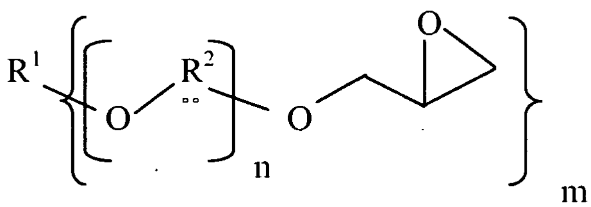

Formule I

dans laquelle,

$R^1$ représente un dérivé hydrocarboné alkyle en $C_1$ - $C_{15}$, aryle en $C_6$ - $C_{15}$ ou aralkyl en $C_7$-$C_{15}$, de valence m, de préférence $R^1$ représente un radical alkyle ou alkylène en $C_1$ - $C_4$ et encore plus préférentiellement $R^1$ est $-CH_3$, $-CH_2-CH_2-$, $-CH_2CH(CH_3)-$

$R^2$ représente un radical alkylène en $C_1$-$C_{10}$, particulièrement le radical

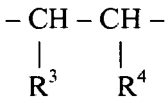

dans lequel $R^3$ et $R^4$ sont, indépendamment l'un de l'autre, un atome d'hydrogène ou un radical alkyle en $C_1$-$C_4$, de préférence $R^2$ est un radical éthylène ou propylène, plus préférentiellement éthylène,
n est un nombre supérieur à 1, de préférence inférieur à 120 et plus préférentiellement un nombre entier de 2 à 60,
m est un nombre entier de 1 à 4, de préférence 1 ou 2 et plus préférentiellement m vaut 2 de manière à ce que le bloc polyéther du copolymère diénique à blocs préparé se situe en milieu de chaîne entre deux blocs constitués d'un élastomère diénique.

Parmi les agents de fonctionnalisation répondant à la formule générale I, on peut citer par exemple le diéthylène glycol glycidyl méthyl éther (de numéro CAS [71712-93-1]), le triéthylène glycol glycidyl méthyl éther (de numéro CAS [73692-54-3]), le tétraéthylène glycol glycidyl méthyl éther (de numéro CAS [73692-52-1]), le polyéthylène glycol glycidyl méthyl éther (de numéro CAS [40349-67-5]), le polypropylene glycol monoglycidyl monobutyléther (de numéro CAS [62412-80-0]),le diéthylèneglycol diglycidyl éther (de numéro CAS [4206-61-5]), le dipropylene glycol diglycidyl éther (de numéro CAS [41638-13-5]), le triéthylèneglycol diglycidyl éther (de numéro CAS [1954-28-5]), le tripropylene glycol diglycidyl éther (de numéro CAS [74925-61-4]),le tétraéthylèneglycol diglycidyl éther (de numéro CAS [17626-93-6]), le tétrapropylene glycol diglycidyl éther (de numéro CAS [41550-23-6]), le polyéthylèneglycol diglycidyl éther (de numéro CAS [26403-72-5]), le polypropylene glycol diglycidyl éther (de numéro CAS [26142-30-3]), et conviennent à titre préférentiel le polyéthylène glycol glycidyl méthyl éther (de numéro CAS [40349-67-5]) et le polyéthylèneglycol diglycidyl éther (de numéro CAS [26403-72-5]).

Le bloc élastomère diénique peut être statistique, séquencé ou microséquencé. Ce bloc peut avoir toute microstructure appropriée, qui est fonction des conditions particulières de mise en oeuvre de la réaction de polymérisation, telles que la présence ou non d'un agent polaire et/ou randomisant et les quantités d'agent polaire et/ou randomisant employées.

Par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de diènes conjugués utilisables dans le procédé conforme à l'invention conviennent notamment le butadiène-1,3, le 2-méthyl-1,3-butadiène, les 2,3 di(alcoyle en C1 à C5)- 1,3 -butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4 hexadiène, etc.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène, le vinylnaphtalène, etc.

A titre préférentiel pour ce bloc diénique, conviennent les polybutadiènes, les copolymères butadiène-styrène et les copolymères butadiène-styrène-isoprène préparés en solution et le polyisoprène. Avantageusement, ledit bloc diénique est un copolymère butadiène-styrène préparé en solution.

A ce titre conviennent notamment les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère

butadiène-styrène-isoprène ayant une Tg comprise entre - 20°C et - 70°C.

L'élastomère vivant constituant le premier réactif peut être obtenu de manière connue en soi, par voie anionique au moyen d'un initiateur organométallique mono-ou polyfonctionnel. Toutefois un initiateur contenant un métal alcalin tel que le lithium est utilisé à titre préférentiel. Comme initiateurs organolithiens conviennent notamment ceux comportant une ou plusieurs liaisons carbone-lithium. Des composés représentatifs sont les organolithiens aliphatiques tels que l'éthyllithium, le n-butyllithium (n-BuLi), l'isobutyllithium, les polyméthylènes dilithium tels que le 1,4-dilithiobutane, etc...Les initiateurs organolithiens monofonctionnels sont particulièrement préférés, notamment en vue de l'obtention de copolymères à au moins trois blocs, le bloc polyéther se situant en milieu de chaîne polymérique entre au moins deux blocs constitués d'un élastomère diénique. Les amidures de lithium sont également des initiateurs préférés. L'amidure de lithium est obtenu à partir d'une amine secondaire acyclique ou cyclique, dans ce dernier cas la pyrrolidine et l'hexaméthylèneimine sont hautement préférées ; ledit amidure pouvant être rendu soluble dans un solvant hydrocarboné grâce à l'utilisation conjointe d'un agent de solvatation, un éther par exemple, comme décrit dans le brevet FR 2 250 774.

La polymérisation est de préférence effectuée, de manière connue en soi, en présence d'un solvant inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

Plusieurs types d'agents polaires peuvent être utilisés parmi lesquels des agents polaires non chélatants de type THF et des agents polaires chélatants possédant sur au moins deux atomes au moins un doublet non liant, comme par exemple de type tétrahydrofurfuryl éthyle éther ou tétraméthyl éthylènediamine.

La polymérisation peut être effectuée en continu ou en discontinu. On effectue généralement la polymérisation à une température comprise entre 20°C et 120°C et de préférence voisine de 30°C à 90°C.

La réaction de fonctionnalisation de l'élastomère diénique vivant, obtenu à l'issue de cette étape de polymérisation, peut se dérouler à une température comprise entre -20°C et 100°C, par addition de l'agent de fonctionnalisation de formule générale I sur les chaînes polymériques vivantes ou inversement. Cette réaction peut bien sûr avoir été réalisée avec un ou plusieurs agents de fonctionnalisation répondant à la formule générale I.

Le mélangeage peut être réalisé par tout moyen approprié notamment à l'aide de tout mélangeur disposant d'une agitation de type statique et/ou tout mélangeur dynamique de type parfaitement agité connu par l'homme de l'art. Ce dernier détermine le temps de réaction entre le polymère diénique vivant et l'agent de fonctionnalisation. A titre d'exemple, ce temps peut être compris entre 10 secondes et 2 heures.

Selon une variante, le procédé de l'invention peut en outre comprendre une étape de fonctionnalisation, de couplage et/ou d'étoilage, connue de l'homme du métier, mettant en oeuvre un composé différent de l'agent de fonctionnalisation de formule générale I, par exemple un agent de couplage et:ou d'étoilage comprenant un atome du groupe IV de la classification périodique des éléments, tel que notamment un dérivé à base d'étain.

On notera que cette modification supplémentaire de l'élastomère diénique peut être avantageusement mise en oeuvre pour réguler le fluage à froid du copolymère à blocs de l'invention.

Un autre objet de l'invention est le copolymère diénique à blocs, l'un au moins desdits blocs étant constitué d'un élastomère diénique et l'autre au moins desdits blocs étant constitué d'un polyéther, susceptible d'être ou directement obtenu en mettant en oeuvre le procédé de préparation décrit ci-dessus. Ce copolymère à blocs présente la particularité d'avoir un taux élevé de blocs polyéther greffés.

Préférentiellement, le taux de blocs polyéther greffés à l'issue de la fonctionnalisation de l'élastomère vivant est d'au moins 65%.

Selon une variante de l'invention, le copolymère diénique à blocs est un copolymère comportant au moins trois blocs, au moins un bloc polyéther se situant en milieu de chaîne entre deux blocs d'élastomère diénique. De préférence selon cette variante, le copolymère selon l'invention est constitué de trois blocs, le bloc polyéther se situant entre deux blocs d'élastomère diénique.

L'invention a également pour objet une composition de caoutchouc renforcée à base d'au moins un copolymère diénique à blocs tel que décrit plus haut qui est destinée à interagir avec la charge renforçante.

Le taux de blocs polyéther greffés sur les chaînes élastomériques selon l'invention permet une interaction de meilleure qualité avec la charge renforçante et donc une amélioration des propriétés mécaniques, notamment hystérétiques de la composition renforcée contenant le copolymère à blocs de l'invention.

Par l'expression "à base de", il faut entendre dans la présente demande une composition comportant le mélange et/ou le produit de la réaction des différents constituants utilisés, certains des constituants étant susceptibles de, ou destinés à réagir entre eux, au moins en partie, lors des différentes phases de fabrication de la composition, en particulier au cours de la vulcanisation (cuisson).

Une composition de caoutchouc selon l'invention est obtenue par mélangeage au moyen d'un travail thermomécanique dudit copolymère diénique à blocs, d'une part, avec une charge renforçante et, d'autre part, avec des additifs appropriés pour l'obtention d'une composition de caoutchouc vulcanisable.

Selon des variantes de réalisation pour l'obtention de cette composition selon l'invention, on utilise ledit copolymère à blocs en coupage avec un autre copolymère à blocs selon la présente invention et/ou avec un ou plusieurs

élastomères conventionnellement utilisés dans les enveloppes de pneumatiques et choisis parmi le caoutchouc naturel, les élastomères diéniques synthétiques, éventuellement couplés et/ou étoilés et/ou encore partiellement ou entièrement fonctionnalisés par un agent de fonctionnalisation différent de celui utilisé dans le procédé de préparation de l'invention décrit plus haut et représenté par la formule générale I, les élastomères synthétiques autres que diéniques, voire des polymères autres que des élastomères.

On notera que l'amélioration des propriétés de la composition de caoutchouc selon l'invention sera d'autant plus élevée, que la proportion dudit ou desdits élastomères conventionnels dans la composition selon l'invention sera plus réduite. Avantageusement, cet ou ces élastomères conventionnels pourront le cas échéant être présents dans la composition selon l'invention selon une quantité allant de 1 à 80 parties en poids pour 100 parties en poids de copolymère diénique à blocs susceptible d'être obtenu en mettant en oeuvre le procédé de préparation de l'invention décrit plus haut.

La charge renforçante de la composition de caoutchouc selon l'invention contient au moins une charge inorganique renforçante.

Dans la présente demande, on entend par " charge inorganique renforçante ", de manière connue, une charge inorganique ou minérale, quelles que soient sa couleur et son origine (naturelle ou de synthèse), encore appelée charge " blanche " ou parfois charge " claire ", voire "charge non noir" ("*non-black filler*") par opposition au noir de carbone (considéré comme une charge organique dans le cadre de la présente description), cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique. Une telle charge se caractérise généralement, de manière connue, par la présence de groupes hydroxyle (-OH) à sa surface, nécessitant en cela l'emploi d'un agent ou système de couplage destiné à assurer une liaison stable entre l'élastomère et la charge.

Avantageusement, ladite charge inorganique renforçante est, en totalité ou tout du moins majoritairement, de la silice ($SiO_2$) La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, même si les silices précipitées hautement dispersibles sont préférées.

Dans le présent exposé, la surface spécifique BET est déterminée de manière connue, selon la méthode de Brunauer-Emmet-Teller décrite dans " The Journal of the American Chemical Society " Vol. 60, page 309, février 1938 et correspondant à la norme AFNOR NFT 45007 (novembre 1987); la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomère, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV 3380 de la société Degussa, les silices Zeosil 1165 MP, 1135 MP et 1115 MP de la société Rhodia, la silice Hi-Sil 2000 et Hi Sil EZ 150G de la société PPG, les silices Zeopol 8715, 8755 ou 8745 de la Société Huber telles que décrites dans la demande WO 03/016387, des silices précipitées traitées telles que par exemple les silices " dopées " à l'aluminium décrites dans le document de brevet EP A 735 088.

L'état physique sous lequel se présente la charge inorganique renforçante est indifférent, que ce soit sous forme de poudre, microperles, granulés, ou de billes. Bien entendu, on entend également par charge inorganique renforçante des mélanges de différentes charges inorganiques renforçantes, en particulier de silice hautement dispersibles telles que décrites ci-dessus. A titre de charge inorganique renforçante, convient également l'alumine ($Al_2O_3$) hautement dispersible ayant une surface BET allant de 30 à 400 $m^2/g$, plus préférentiellement entre 60 et 250 $m^2/g$, une taille moyenne de particules au plus égale à 500 nm, plus préférentiellement au plus égale à 200 nm qui sont décrites dans le document de brevet européen EP A 810 258. Comme exemples non limitatifs de telles alumines renforçantes, on peut citer notamment les alumines " Baikalox A125 " ou " CR125 " (Société Baïkowski), " APA 100RDX " (Condéa), " Aluminoxid C " (Degussa) ou " AKP G015 " (Sumitomo Chemicals). Conviennent également les hydroxydes d'aluminium, tels que ceux décrits dans le document de brevet WO A 99/28376.

On notera que la charge renforçante d'une composition de caoutchouc selon l'invention peut contenir en mélange, en plus de la ou des charges inorganiques renforçantes précitées, une charge organique, telle que du noir de carbone.

Cependant, à titre préférentiel, la charge inorganique renforçante est présente dans la charge renforçante selon une fraction massique supérieure à 50% et pouvant aller jusqu'à 100%.

Comme noirs de carbone conviennent tous les noirs de carbone, notamment les noirs du type HAF, ISAF, SAF, conventionnellement utilisés dans les pneumatiques et particulièrement dans les bandes de roulement des pneumatiques. A titre d'exemples non limitatifs de tels noirs, on peut citer les noirs N115, N134, N234, N339, N347, N375. Comme charges inertes non renforçantes conviennent des particules d'argile, bentonite, talc, craie, kaolin.

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par exemple, les coupages noir/silice ou les noirs partiellement ou intégralement recouverts de silice conviennent pour constituer la charge renforçante. Conviennent également des charges organiques renforçantes comprenant les noirs de carbone recouverts au moins en partie d'une couche inorganique, par exemple de silice nécessitant quant à elle l'utilisation d'un agent de couplage pour établir la liaison avec l'élastomère, tels que, à titre non limitatif, les charges qui sont commercialisées par la société CABOT sous la dénomination " CRX 2000 ", et qui sont décrites dans le document de brevet WO A 96/37547.

Dans le cas où la charge renforçante ne contient qu'une charge inorganique renforçante et du noir de carbone, la fraction massique de ce noir de carbone dans ladite charge renforçante est préférentiellement choisie inférieure ou égale à 30 %.

Cependant, l'expérience montre que les propriétés précitées de la composition selon l'invention sont d'autant plus améliorées, que la charge renforçante qu'elle comprend contient une fraction massique plus élevée en charge inorganique renforçante, c'est à dire supérieure à 70 %. L'expérience montre également que lesdites propriétés sont optimales lorsque ladite composition contient uniquement une charge inorganique renforçante, par exemple de la silice, à titre de charge renforçante. Ce dernier cas constitue donc un exemple préférentiel de composition de caoutchouc selon l'invention.

Préférentiellement, la charge inorganique renforçante est présente dans la composition de l'invention selon une quantité comprise entre 20 et 200 pce [pce : parties en poids pour cent parties d'élastomère(s)], plus préférentiellement entre 40 et 150 pce, l'optimum étant différent selon les applications visées.

La composition de caoutchouc selon l'invention comprend en outre, de manière classique, un agent de liaison charge inorganique renforçante / matrice élastomère.

Par agent de liaison, on entend plus précisément un agent apte à établir une liaison suffisante de nature chimique et/ou physique entre la charge considérée et l'élastomère, tout en facilitant la dispersion de cette charge au sein de la matrice élastomère. Un tel agent de liaison, au moins bifonctionnel, a par exemple comme formule générale simplifiée " Y-T-X ", dans laquelle :

- Y représente un groupe fonctionnel (fonction " Y ") qui est capable de se lier physiquement et/ou chimiquement à la charge inorganique, une telle liaison pouvant être établie, par exemple, entre un atome de silicium de l'agent de couplage et les groupes hydroxyle (-OH) de surface de la charge inorganique (par exemple les silanols de surface lorsqu'il s'agit de silice);
- X représente un groupe fonctionnel (fonction " X ") capable de se lier physiquement et/ou chimiquement à l'élastomère, par exemple par l'intermédiaire d'un atome de soufre;
- T représente un groupe divalent permettant de relier Y et X.

Les agents de liaison ne doivent pas être confondus avec de simples agents de recouvrement de la charge considérée qui, de manière connue, peuvent comporter la fonction Y active vis-à-vis de la charge mais sont dépourvus de la fonction X active vis-à-vis de l'élastomère. On peut utiliser tout agent de liaison connu pour, ou susceptible d'assurer efficacement dans les compositions de caoutchouc utilisables pour la fabrication de pneumatiques, la liaison (ou le couplage) entre une charge inorganique renforçante telle que de la silice et un élastomère diénique, comme par exemple des organosilanes, notamment des alkoxysilanes polysulfurés ou des mercaptosilanes, ou encore des polyorganosiloxanes porteurs des fonctions X et Y précitées. Des agents de liaison silice/élastomère, notamment, ont été décrits dans un grand nombre de documents, les plus connus étant des alkoxysilanes bifonctionnels tels que des alkoxysilanes polysulfurés.

On utilise en particulier des alkoxysilanes polysulfurés, dits " symétriques " ou " asymétriques " selon leur structure particulière, tels que décrits par exemple dans les brevets US A 3 842 111, US A 3 873 489, US A 3 978 103, US A 3 997 581, US A 4 002 594, US A 4 072 701, US A 4 129 585, ou dans les brevets plus récents US A 5 580 919, US A 5 583 245, US A 5 650 457, US A 5 663 358, US A 5 663 395, US A 5 663 396, US A 5 674 932, US A 5 675 014, US A 5 684 171, US A 5 684 172, US A 5 696 197, US A 5 708 053, US A 5 892 085, EP A 1 043 357, WO 03/002648 (ou US 2005/0016651) et WO 03/002649 (ou US 2005/0016650), qui énoncent en détail de tels composés connus.

Conviennent en particulier, sans que la définition ci-après soit limitative, des alkoxysilanes polysulfurés symétriques répondant à la formule générale (II) suivante :

(II) $Z - A - S_{n'} - A - Z$, dans laquelle :

- n' est un entier de 2 à 8 (de préférence de 2 à 5);
- A est un radical hydrocarboné divalent (de préférence des groupements alkylène en C1-C18 ou des groupements

arylène en C6-C12, plus particulièrement des alkylènes en C1-C10, notamment en C1-C4 en particulier le propylène);

- Z répond à l'une des formules ci-après :

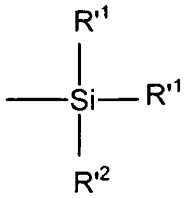 ; 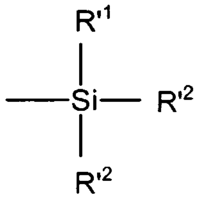 ; 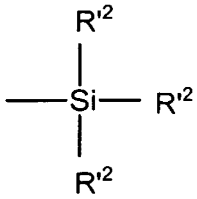 ,

dans lesquelles :

- les radicaux R'[1], substitués ou non substitués, identiques ou différents entre eux, représentent un groupe alkyle en C1-C18, cycloalkyle en C5-C18 ou aryle en C6-C 18 (de préférence des groupes alkyle en C1-C6, cyclohexyle ou phényle, notamment des groupes alkyle en C1-C4, plus particulièrement le méthyle et/ou l'éthyle) ;

- les radicaux R'[2] substitués ou non substitués, identiques ou différents entre eux, représentent un groupe hydroxyle, alkoxyle en C1-C18 ou cycloalkoxyle en C5-C18 (de préférence des groupes alkoxyle en C1-C8 ou cycloalkoxyle en C5-C8, plus préférentiellement des groupes alkoxyle en C1-C4, en particulier le méthoxyle et/ou l'éthoxyle).

Dans le cas d'un mélange d'alkoxysilanes polysulfurés répondant à la formule (II) ci-dessus, notamment des mélanges usuels disponibles commercialement, on comprendra que la valeur moyenne des " n' " est un nombre fractionnaire, de préférence allant de 2 à 5 et plus préférentiellement proche de 4.

Comme alkoxysilanes polysulfurés, on citera plus particulièrement les polysulfures (notamment les disulfures, trisulfures ou tétrasulfures) de bis-(alkoxyl(C1-C4)-alkyl(C1-C4)silylalkyl(C1-C4)), comme par exemple les polysulfures de bis(3 triméthoxysilylpropyl) ou de bis(3-triéthoxysilylpropyl). Parmi ces composés, on utilise notamment le tétrasulfure de bis(3-triéthoxysilylpropyl), en abrégé TESPT, de formule $[(C_2H_5O)_3Si(CH_2)_3S_2]_2$ ou le disulfure de bis(triéthoxysilylpropyle), en abrégé TESPD, de formule $[(C_2H_5O)_3Si(CH_2)_3S]_2$. Le TESPD est commercialisé par exemple par la société Degussa sous les dénominations Si266 ou Si75 (dans le second cas, sous forme d'un mélange de disulfure (à 75 % en poids) et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n' qui est proche de 4). On citera également les polysulfures (notamment disulfures, trisulfures ou tétrasulfures) de bis (monoalkoxyl($C_1$-$C_4$) dialkyl($C_1$-$C_4$) silylpropyl), plus particulièrement le tétrasulfure ou disulfure de bis monoéthoxydiméthylsilylpropyle (en abrégé MESPT), qui font l'objet de la demande de brevet international WO 02/083782 (ou US 2004/0132880) au nom des demanderesses.

A titre d'exemples d'agents de liaison autres que les alkoxysilanes polysulfurés précités, on citera notamment des polyorganosiloxanes (POS) bifonctionnels ou encore des polysulfures d'hydroxysilane tels que décrits dans les demandes WO 02/30939 (ou US 6,774,255) et WO 02/31041 5 ou US 2004/051210), ou encore des silanes ou POS porteurs de groupements azo-dicarbonyle, tels que décrits par exemple dans les demandes de brevets WO 2006/125532, WO 2006/125533 et WO 2006/125534.

Dans les compositions conformes à l'invention, le taux d'agent de liaison est avantageusement inférieur à 20 pce, étant entendu qu'il est en général souhaitable d'en utiliser le moins possible. Son taux est préférentiellement compris entre 0,5 et 12 pce, plus préférentiellement de 3 à 10 pce, en particulier de 4 à 7 pce.

Les compositions conformes à l'invention comprennent également, outre ledit copolymère diénique à blocs selon l'invention, et ladite charge inorganique renforçante, des plastifiants, des pigments, des anti-oxydants, des agents anti-fatigue, des cires anti-ozonantes, des promoteurs d'adhésion, des résines renforçantes ou plastifiantes, par exemple telles que décrites dans le document WO02/10269, des peroxydes et ou bismaléimides, des accepteurs (par exemple résine phénolique novolaque) ou des donneurs de méthylène (par exemple HMT ou H3M), un système de réticulation à base soit de soufre et/ou de peroxyde et/ou de bismaléimides, des activateurs de réticulation comprenant du monoxyde de zinc et de l'acide stéarique, des dérivés guanidiques (en particulier diphénylguanidine), des huiles d'extension, un ou plusieurs agents de recouvrement de la silice tels que des alcoxysilanes, des polyols, ou des amines.

En particulier, ces compositions peuvent être telles que ledit copolymère diénique à blocs selon l'invention,

est étendu à une huile aromatique ou non aromatique ou très faiblement aromatique, choisie dans le groupe constitué par une huile paraffinique, naphténique, huile MES, huile TDAE, les esters de glycérol, les résines plastifiantes hydrocarbonées présentant une haute Tg de préférence supérieure à 25 °C et les mélanges de tels plastifiants, avec une quantité d'huile d'extension comprise entre 0 et 50 pce.

La composition de caoutchouc vulcanisable conforme à l'invention peut être préparée selon un procédé comprenant les étapes suivantes:

(i) la réalisation, à une température maximale comprise entre 130 °C et 200 °C, d'un premier temps de travail thermomécanique (parfois qualifié de phase " non productive") des constituants de base nécessaires, à l'exception du système de réticulation, de ladite composition, comprenant au moins un copolymère diénique à blocs selon l'invention et une charge renforçante, puis

(ii) la réalisation, à une température inférieure à ladite température maximale dudit premier temps, de préférence inférieure à 120 °C, d'un second temps de travail mécanique au cours duquel est incorporé ledit système de réticulation,

(iii) l'extrusion ou le calandrage de la composition de caoutchouc ainsi obtenue, sous la forme désirée, pour fabriquer des semi-finis tels que des bandes de roulement.

Ce procédé peut également comprendre, préalablement à la réalisation des étapes (i), (ii) et (iii) précitées, les étapes de la préparation d'un copolymère diénique à blocs préparé selon le procédé de l'invention, à savoir, dans une première étape, la réaction du (des) monomère(s) en présence ou non d'un solvant hydrocarboné inerte en présence ou non d'un agent polaire avec un initiateur de polymérisation, pour former un élastomère diénique vivant et la réaction, dans une seconde étape, dudit élastomère vivant avec l'agent de fonctionnalisation de formule générale I, pour obtenir, le copolymère diénique à blocs. La préparation du copolymère diénique à blocs peut également comprendre une étape de fonctionnalisation, de couplage et/ou d'étoilage supplémentaire telle que décrite précédemment selon une variante du procédé.

L'invention a également pour objet un pneumatique qui incorpore dans au moins un de ses éléments constitutifs une composition de caoutchouc telle que celle susmentionnée, et plus particulièrement des articles semi-finis d'un pneumatique qui comprennent cette composition.

En raison de l'hystérèse réduite qui caractérise une composition de caoutchouc selon l'invention à l'état vulcanisé, on notera qu'un pneumatique dont la bande de roulement comprend ladite composition présente une résistance au roulement avantageusement réduite. L'invention a donc également pour objet une bande de roulement de pneumatique qui est telle qu'elle comprend une composition de caoutchouc réticulable ou réticulée telle que celle susmentionnée, ou bien qui est telle qu'elle est constituée de cette composition.

Les caractéristiques précitées de la présente invention, ainsi que d'autres, seront mieux comprises à la lecture de la description suivante de plusieurs exemples de réalisation de l'invention, donnés à titre illustratif et non limitatif.

## EXEMPLES DE REALISATION DE L'INVENTION

### <u>I Préparation des polymères</u>

#### <u>**A)** Mesures et tests utilisés</u>

Techniques expérimentales utilisées pour la caractérisation avant cuisson des polymères obtenus :

**(a)** On utilise la technique SEC (Size Exclusion Chromatography) qui permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans du tétrahydrofurane à une concentration d'environ 1 g/l. Puis la solution est filtrée sur filtre de porosité 0.45µm avant injection.

L'appareillage utilisé est un chromatographe « WATERS alliance ». Le solvant d'élution est le tétrahydrofurane et la température du système de 35°C. Deux jeux de colonnes et conditions chromatographiques correspondantes peuvent alors être utilisés :

1 Un jeu de quatre colonnes WATERS en série, de dénominations commerciales « STYRAGEL HMW7 », « STYRAGEL HMW6E » et deux « STYRAGEL HT6E » avec un débit de 0.7 ml/min.

2 Un jeu de deux colonnes WATERS de dénomination commerciale « STYRAGEL HT6E » avec un débit de 1 ml/min.

Le volume injecté de la solution de l'échantillon de polymère est 100 μl. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée pour des SBR de microstructure suivante : 25 % massique de motifs type styrène, 23% massique de motifs type 1-2 et 50 % massique de motifs type 1-4 trans.

**(b)** Pour les polymères et les compositions de caoutchouc, les viscosités Mooney ML (1+4) à 100 °C sont mesurées selon la norme ASTM D 1646.

On utilise un consistomètre oscillant tel que décrit dans la norme ASTM D 1646. La mesure de plasticité Mooney se fait selon le principe suivant : la composition à l'état cru (i.e. avant cuisson) est moulée dans une enceinte cylindrique chauffée à 100 °C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en " unité Mooney " (UM, avec 1 UM = 0,83 N.m).

**(c)** Les températures de transition vitreuse Tg des polymères sont mesurées au moyen d'un calorimètre différentiel (" differential scanning calorimeter ").

**(d)** Les analyses RMN sont réalisées sur un spectromètre 500 MHz BRUKER équipé d'une sonde " large bande " BBIz 5 mm. Pour l'expérience RMN $^1H$ quantitative, la séquence utilise une impulsion 30° et un délai de répétition de 2 secondes. Les échantillons sont solubilisés dans le sulfure de carbone ($CS_2$). 100 μL de cyclohexane deutéré ($C_6D_{12}$) sont ajoutés pour le signal de lock.

Le spectre RMN $^1H$ permet de quantifier la fonction éther par intégration du signal caractéristique des protons du groupement $OCH_2$, situé autour de $\delta$ = 3,4 ppm et la fonction $(CH_3)_2Si$ par intégration du signal caractéristique des protons $SiCH_3$ autour de $\delta$ = 0 ppm.

Le spectre RMN 2D $^1H$-$^{29}Si$ permet de vérifier la nature de la fonction grâce aux valeurs de déplacements chimiques des noyaux Silicium et des protons au voisinage $^2J$ (via 2 liaisons).

**(e)** La spectroscopie proche infrarouge (NIR) est utilisée pour déterminer quantitativement le taux massique de styrène dans l'élastomère ainsi que sa microstructure (répartition relative des unités butadiene 1,2-vinyl, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN $^{13}C$. Le taux de styrène et la microstructure sont alors calculés à partir du spectre NIR d'un film d'élastomère d'environ 730 μm d'épaisseur. L'acquisition du spectre est réalisée en mode transmission entre 4000 et 6200 $cm^{-1}$, avec une résolution de 2 $cm^{-1}$, à l'aide d'un spectromètre proche infrarouge à transformée de Fourier Bruker Tensor 37 équipé d'un détecteur InGaAs refroidi par effet Peltier.

**(f)** Pour les polymères, la viscosité inhérente à 25 °C d'une solution de polymère à 0,1 g/dl dans le toluène, est mesurée à partir d'un polymère sec :

PRINCIPE :

La viscosité inhérente est déterminée par la mesure du temps d'écoulement t de la solution de polymère et du temps d'écoulement $t_0$ du toluène, dans un tube capillaire.

Dans un tube Ubbelhode préalablement étalonné (diamètre du capillaire 0.46 mm, capacité 18 à 22 ml), placé dans un bain thermostaté à 25 ± 0,1 °C, le temps d'écoulement du toluène et celui de la solution de polymère à 0,1 g/dl sont mesurés.

La viscosité inhérente est obtenue par la relation suivante :

$$\eta_{inh} = \frac{1}{C} \ln \left[ \frac{\left( t - \frac{H}{t} \right)}{\left( t_o - \frac{H}{t_o} \right)} \right]$$

avec :

**C** : concentration de la solution toluénique de polymère en g/dl ;
**t** : temps d'écoulement de la solution toluénique de polymère en secondes ;
$\mathbf{t_o}$ : temps d'écoulement du toluène en secondes ;
$\eta_{inh}$ viscosité inhérente exprimée en dl/g.
**H** : constante d'étalonnage du tube

**B)** Préparation des polymères

**Exemple 1 :** Polymère A conformément à l'invention

Dans un réacteur de 10 litres, maintenu sous une pression d'azote de 2 bars, contenant 5300 grammes de cyclohexane, sont injectés 140 grammes de styrène et 390 grammes de butadiène ainsi que 3,3 mL de tétrahydrofurane et 1,6 mmol de *tert*-amylate de sodium. Après neutralisation des impuretés dans la solution à polymériser par addition de n-butyllithium, sont ajoutés 5,30 mmol de n-BuLi. La polymérisation est conduite à 50°C. Après 49 min, le taux de conversion des monomères atteint 95 %. Ce taux est déterminé par pesée d'un extrait séché à 110 °C, sous la pression réduite de 200 mmHg. Un échantillon témoin est alors prélevé depuis le réacteur puis stoppé avec un excès de méthanol par rapport au lithium. La viscosité inhérente (viscosité " initiale "), laquelle est mesurée à 25 °C à 0,1 g/dl dans le toluène, est de 1,03 dl/g. La masse moléculaire Mn de ce témoin, déterminée par la technique SEC, est de 75000 g/mol, l'Ip est de 1,11.

La température du réacteur est augmentée à 60°C et sont alors injectés 2.6 mmol d'une solution à 0.11 $mol.L^{-1}$ de poly(ethylene glycol) diglycidyl ether (de numéro CAS [26403-72-5] commercialisé par la société Aldrich sous la référence 475696 avec une Mn indiquée par ce fournisseur de 526 $g.mol^{-1}$) dans le toluène préalablement désaéré.

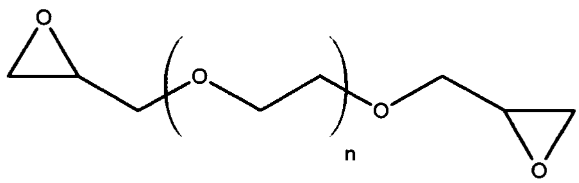

Après 60 min de réaction à 60°C, la réaction est stoppée par ajout de 8,0 mL de méthanol. La viscosité inhérente " finale " mesurée est de 1,54 dL/g. Le saut de viscosité, défini comme le rapport de ladite viscosité " finale " sur ladite viscosité " initiale ", est ici de 1,49. La viscosité ML du polymère ainsi couplé est de 27.

Le copolymère diénique à blocs A est alors soumis à un traitement antioxydant par addition de 0,44 parties pour cent parties d'élastomères (pce) de 4,4'-méthylène-bis-2,6-tert-butylphénol et de 0,11 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres et en étuve à 60 °C sous courant d'azote.

La masse moléculaire Mn de ce copolymère à blocs A, déterminée par la technique SEC, est de 121 000 g/mol et l'Ip est de 1,31. La décomposition mathématique du chromatogramme SEC en somme de gaussiennes (en faisant l'hypothèse que les coefficients de réponse du détecteur réfractométrique (dn/dc) des différentes populations sont identiques) indique la présence d'une population résiduelle de chaînes linéaires non couplées à hauteur de 19 % en poids.

Le taux de fonctions $OCH_2$ déterminé par RMN $^1H$ pour le copolymère A est de 72 mmol/kg ce qui, compte tenu de la masse moléculaire Mn théorique du polymère diénique et de celle du bloc polyéthylène glycol correspond à

un taux de fonctionnalisation par le bloc polyéther d'environ 65%.

La microstructure de ce copolymère A est déterminée par la méthode NIR :

Le taux massique de motifs 1,4-trans est de 34 %, celui de motifs 1,4-cis est de 28 % et celui de motifs 1,2 est de 38 % (chacun de ces trois taux se rapporte aux unités butadiène).
Le taux massique de styrène est de 25 %.

**Exemple 2 :** Polymère B conformément à l'invention

Dans un réacteur de 10 litres, maintenu sous une pression d'azote de 2 bars, contenant 5300 grammes de cyclohexane, sont injectés 140 grammes de styrène et 390 grammes de butadiène ainsi que 4,6 mL de tetrahydrofurane et 1,4 mmol de *tert*-amylate de sodium. Après neutralisation des impuretés dans la solution à polymériser par addition de n-butyllithium, sont ajoutés 4,77 mmol de n-BuLi. La polymérisation est conduite à 50°C. Après 42 min, le taux de conversion des monomères atteint 95 %. Ce taux est déterminé par pesée d'un extrait séché à 110 °C, sous la pression réduite de 200 mmHg. Un échantillon témoin est alors prélevé depuis le réacteur puis stoppé avec un excès de méthanol par rapport au lithium. La viscosité inhérente (viscosité " initiale "), laquelle est mesurée à 25 °C à 0,1 g/dl dans le toluène, est de 1,07 dL/g. La masse moléculaire Mn de ce témoin, déterminée par la technique SEC, est de 83 000 g/mol, l'Ip est de 1,08.

La température du réacteur est augmentée à 60°C et sont alors injectés 2.4 mmol d'une solution à 0,091 $mol.L^{-1}$ de poly(ethylene glycol) diglycidyl ether (de numéro CAS [26403-72-5] commercialisé par la société Aldrich sous la référence 475696 avec une Mn indiquée par ce fournisseur de 526 $g.mol^{-1}$) dans le toluène préalablement désaéré.

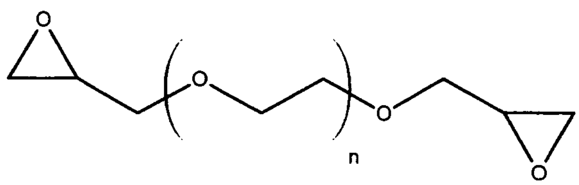

Après 60 min de réaction à 60°C, la réaction est stoppée par ajout de 7,2 mL de méthanol. La viscosité inhérente " finale " mesurée est de 1,60 dL/g. Le saut de viscosité, défmi comme le rapport de ladite viscosité " finale " sur ladite viscosité " initiale ", est ici de 1,50. La viscosité ML du polymère ainsi couplé est de 34.

Le copolymère diénique à blocs B est alors soumis à un traitement antioxydant par addition de 0,44 parties pour cent parties d'élastomères (pce) de 4,4'-méthylène-bis-2,6-*tert*-butylphénol et de 0,11 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres et en étuve à 60 °C sous courant d'azote.

La masse moléculaire Mn de ce copolymère à blocs B, déterminée par la technique SEC, est de 131 000 g/mol et l'Ip est de 1,30. La décomposition mathématique du chromatogramme SEC en somme de gaussiennes (en faisant l'hypothèse que les coefficients de réponse du détecteur réfractométrique (dn/dc) des différentes populations sont identiques) indique la présence d'une population résiduelle de chaînes linéaires non couplées à hauteur de 24 % en poids.

Le taux de fonctions $OCH_2$ déterminé par RMN $^1H$ pour le copolymère B est de 72 mmol/kg ce qui, compte tenu de la masse moléculaire Mn théorique du polymère diénique et de celle du bloc polyéthylène glycol correspond à un taux de fonctionnalisation par le bloc polyéther d'environ 70 %.

La microstructure de ce copolymère B est déterminée par la méthode NIR :

Le taux massique de motifs 1,4-trans est de 34 %, celui de motifs 1,4-cis est de 27 % et celui de motifs 1,2 est de 39 % (chacun de ces trois taux se rapporte aux unités butadiène).
Le taux massique de styrène est de 25 %.

**Exemple 3 :** Polymère C conformément à l'invention

Dans un réacteur de 10 litres, maintenu sous une pression d'azote de 2 bars, contenant 5200 grammes de cyclohexane, sont injectés 135 grammes de styrène et 385 grammes de butadiène ainsi que 4,5 mL de tetrahydrofurane et 1,2 mmol de *tert*-amylate de sodium. Après neutralisation des impuretés dans la solution à polymériser par addition de n-butyllithium, sont ajoutés 3,95 mmol de n-BuLi. La polymérisation est conduite à 50°C. Après 56 min, le taux de conversion des monomères atteint 97 %. Ce taux est déterminé par pesée d'un extrait séché à 110 °C, sous la pression réduite de 200 mmHg. Un échantillon témoin est alors prélevé depuis le réacteur puis stoppé avec un excès de méthanol

par rapport au lithium. La viscosité inhérente (viscosité " initiale "), laquelle est mesurée à 25 °C à 0,1 g/dl dans le toluène, est de 1,19 dl/g. La masse moléculaire Mn de ce témoin, déterminée par la technique SEC, est de 95000 g/mol, l'Ip est de 1,10.

La température du réacteur est augmentée à 60°C et sont alors injectés 1,98 mmol d'une solution à 0,091 mol.$L^{-1}$ de poly(ethylene glycol) diglycidyl ether (de numéro CAS [26403-72-5] commercialisé par la société Aldrich sous la référence 475696 avec une Mn indiquée par ce fournisseur de 526 g.$mol^{-1}$) dans le toluène préalablement désaéré.

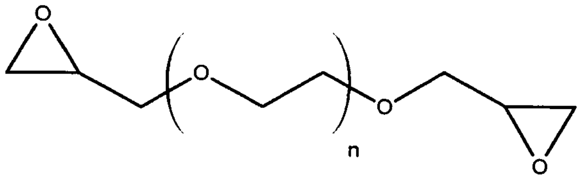

Après 60 min de réaction à 60°C, la réaction est stoppée par ajout de 7,2 mL de méthanol. La viscosité inhérente " finale " mesurée est de 1,79 dl/g. Le saut de viscosité, défini comme le rapport de ladite viscosité " finale " sur ladite viscosité " initiale ", est ici de 1,50. La viscosité ML du polymère ainsi couplé est de 53.

Le copolymère diénique à blocs C est alors soumis à un traitement antioxydant par addition de 0,44 parties pour cent parties d'élastomères (pce) de 4,4'-méthylène-bis-2,6-*tert*-butylphénol et de 0,11 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres et en étuve à 60 °C sous courant d'azote.

La masse moléculaire Mn de ce copolymère à blocs C, déterminée par la technique SEC, est de 147 000 g/mol et l'Ip est de 1,37. La décomposition mathématique du chromatogramme SEC en somme de gaussiennes (en faisant l'hypothèse que les coefficients de réponse du détecteur réfractométrique (dn/dc) des différentes populations sont identiques) indique la présence d'une population résiduelle de chaînes linéaires non couplées à hauteur de 24 % en poids.

Le taux de fonctions $OCH_2$ déterminé par RMN $^1H$ pour le copolymère C est de 59 mmol/kg ce qui, compte tenu de la masse moléculaire Mn théorique du polymère diénique et de celle du bloc polyéthylène glycol correspond à un taux de fonctionnalisation par le bloc polyéther d'environ 68 %.

La microstructure de ce copolymère C est déterminée par le NIR :

Le taux massique de motifs 1,4-trans est de 33 %, celui de motifs 1,4-cis est de 28 % et celui de motifs 1,2 est de 39 % (chacun de ces trois taux se rapporte aux unités butadiène).
Le taux massique de styrène est de 25 %.

**Exemple 4 :** Polymère D conformément à l'invention

Dans un réacteur de 10 litres, maintenu sous une pression d'azote de 2 bars, contenant 5200 grammes de cyclohexane, sont injectés 135 grammes de styrène et 385 grammes de butadiène ainsi que 4,5 mL de tetrahydrofurane et 1,3 mmol de *tert*-amylate de sodium. Après neutralisation des impuretés dans la solution à polymériser par addition de n-butyllithium, sont ajoutés 3,6 mmol de n-BuLi. La polymérisation est conduite à 50°C. Après 53 min, le taux de conversion des monomères atteint 96 %. Ce taux est déterminé par pesée d'un extrait séché à 110 °C, sous la pression réduite de 200 mmHg. Un échantillon témoin est alors prélevé depuis le réacteur puis stoppé avec un excès de méthanol par rapport au lithium. La viscosité inhérente (viscosité " initiale "), laquelle est mesurée à 25 °C à 0,1 g/dl dans le toluène, est de 1,30 dl/g. La masse moléculaire Mn de ce témoin, déterminée par la technique SEC, est de 105 000 g/mol, l'Ip est de 1,08.

La température du réacteur est augmentée à 60°C et sont alors injectés 1,82 mmol d'une solution à 0,072 mol.$L^{-1}$ de poly(ethylene glycol) diglycidyl ether (de numéro CAS [26403-72-5] commercialisé par la société Aldrich sous la référence 475696 avec une Mn indiquée par ce fournisseur de 526 g.$mol^{-1}$) dans le toluène préalablement désaéré.

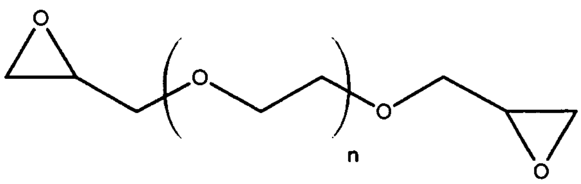

Après 60 min de réaction à 60°C, la réaction est stoppée par ajout de 5,6 mL de méthanol. La viscosité inhérente

" finale " mesurée est de 1,95 dl/g. Le saut de viscosité, défini comme le rapport de ladite viscosité " finale " sur ladite viscosité " initiale ", est ici de 1,50. La viscosité ML du polymère ainsi couplé est de 66.

Le copolymère diénique à blocs D est alors soumis à un traitement antioxydant par addition de 0,44 parties pour cent parties d'élastomères (pce) de 4,4'-méthylène-bis-2,6-tert-butylphénol et de 0,11 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres et en étuve à 60 °C sous courant d'azote.

La masse moléculaire Mn de ce copolymère à blocs D, déterminée par la technique SEC, est de 172000 g/mol et l'Ip est de 1,36. La décomposition mathématique du chromatogramme SEC en somme de gaussiennes (en faisant l'hypothèse que les coefficients de réponse du détecteur réfractométrique (dn/dc) des différentes populations sont identiques) indique la présence d'une population résiduelle de chaînes linéaires non couplées à hauteur de 26 % en poids.

Le taux de fonctions $OCH_2$ déterminé par RMN $^1H$ pour le copolymère D est de 52 mmol/kg ce qui, compte tenu de la masse moléculaire Mn théorique du polymère diénique et de celle du bloc polyéthylène glycol correspond à un taux de fonctionnalisation par le bloc polyéther d'environ 65%.

La microstructure de ce copolymère D est déterminée par la méthode NIR:

Le taux massique de motifs 1,4-trans est de 31 %, celui de motifs 1,4-cis est de 25 % et celui de motifs 1,2 est de 44 % (chacun de ces trois taux se rapporte aux unités butadiène).
Le taux massique de styrène est de 26 %.

**Exemple 5 :** Polymère E " témoin " : SBR fonctionnalisé par une fonction SiOH bout de chaîne

Dans un réacteur de 100 litres, maintenu sous une pression d'azote d'environ 2 bars, contenant 49.7 kg de cyclohexane, sont injectés 1.95 kg de styrène et 5.26 kg de butadiène ainsi que 672 mL d'une solution de *tert*-amylate de sodium à 0,0308 $mol.L^{-1}$ dans le cyclohexane. Après neutralisation des impuretés dans la solution à polymériser par addition de n-butyllithium, est ajouté 729 mL de n-BuLi à 0,0598 $mol.L^{-1}$ dans le cyclohexane. La polymérisation est conduite à 45°C.

Après 110 min, le taux de conversion des monomères atteint 94 %. Ce taux est déterminé par pesée d'un extrait séché à 110 °C, sous la pression réduite de 200 mmHg.

372 mL de solution d'hexaméthylcyclotrisiloxane à 0.0586 $mol.L^{-1}$ dans le cyclohexane sont alors ajoutés. Après 30 min à 60°C, 0,78 L d'une solution de méthanol à 0,1 $mol.L^{-1}$ dans le toluène est alors ajoutée. La viscosité inhérente, laquelle est mesurée à 25 °C à 0,1 g/dl dans le toluène, est de 1.50 dl/g. Le polymère est soumis à un traitement antioxydant par addition de 0,8 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres et en étuve à 60 °C sous courant d'azote.

La viscosité ML du copolymère est de 31.

La masse moléculaire Mn de ce copolymère, déterminée par la technique SEC, est de 142 000 g/mol et l'Ip est de 1,10.

La microstructure de ce copolymère E est déterminée par la méthode NIR :

Le taux massique de motifs 1,4-trans est de 30 %, celui de motifs 1,4-cis est de 28 % et celui de motifs 1,2 est de 42 % (chacun de ces trois taux se rapporte aux unités butadiène).
Le taux massique de styrène est de 26 %.

Le taux de fonctions $(CH_3)_2Si$ déterminé par RMN $^1H$ pour ce copolymère est de 4,5 mmol/kg.

**Exemple 6 :** Polymère F " témoin " : SBR fonctionnalisé par une fonction SiOH bout de chaîne

Dans un réacteur de 100 litres, maintenu sous une pression d'azote d'environ 2 bars, contenant 49.7 kg de cyclohexane, sont injectés 1.95 kg de styrène et 5.26 kg de butadiène ainsi que 532 mL d'une solution de *tert*-amylate de sodium à 0,0308 $mol.L^{-1}$ dans le cyclohexane. Après neutralisation des impuretés dans la solution à polymériser par addition de s-butyllithium, est ajouté 512 mL de s-BuLi à 0,0598 mol.L-$^1$ dans le cyclohexane. La polymérisation est conduite à 45°C.

Après 120 min, le taux de conversion des monomères atteint 92%. Ce taux est déterminé par pesée d'un extrait séché à 110 °C, sous la pression réduite de 200 mmHg.

261 mL de solution d'hexaméthylcyclotrisiloxane à 0.0586 $mol.L^{-1}$ dans le cyclohexane sont alors ajoutés.

Après 30 min à 60°C, 0,59 L d'une solution de méthanol à 0,1 $mol.L^{-1}$ dans le toluène est alors ajoutée. La viscosité inhérente, laquelle est mesurée à 25 °C à 0,1 g/dl dans le toluène, est de 1.81 dl/g. Le polymère est soumis à un traitement antioxydant par addition de 0,8 parties pour cent parties d'élastomères (pce) de 4,4'-méthylène-bis-2,6-*tert*-butylphénol et de 0,2 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres et en étuve à 60 °C sous courant d'azote.

La viscosité ML du copolymère est de 65.

La masse moléculaire Mn de ce copolymère, déterminée par la technique SEC, est de 182 000 g/mol et l'Ip est de 1,13.

La microstructure de ce copolymère F est déterminée par le NIR :

Le taux massique de motifs 1,4-trans est de 33 %, celui de motifs 1,4-cis est de 25 % et celui de motifs 1,2 est de 42 % (chacun de ces trois taux se rapporte aux unités butadiène).
Le taux massique de styrène est de 25 %.

Le taux de fonctions $(CH_3)_2Si$ déterminé par RMN $^1H$ pour ce copolymère est de 4,07 mmol/kg.

**Exemple 7 :** Polymère G " témoin " : SBR non fonctionnel

Dans un réacteur de 100 litres, maintenu sous une pression d'azote d'environ 2 bars, contenant 48.0 kg de cyclohexane, sont injectés 2,39 kg de styrène et 6,46 kg de butadiène ainsi que 772 mL d'une solution de *tert*-amylate de sodium à 0,0304 $mol.L^{-1}$ dans le cyclohexane. Après neutralisation des impuretés dans la solution à polymériser par addition de s-butyllithium, sont ajoutés 676 mL de s-BuLi à 0,0798 $mol.L^{-1}$ dans le cyclohexane. La polymérisation est conduite à 45°C.

Après 120 min, le taux de conversion des monomères atteint 93%. Ce taux est déterminé par pesée d'un extrait séché à 110 °C, sous la pression réduite de 200 mmHg.

0,75 L d'une solution de méthanol à 0,12 $mol.L^{-1}$ dans le toluène est alors ajoutée. La viscosité inhérente, laquelle est mesurée à 25 °C à 0,1 g/dl dans le toluène, est de 1.51 dl/g. Le polymère est alors soumis à un traitement antioxydant par addition de 0,32 parties pour cent parties d'élastomères (pce) de 4,4'-méthylène-bis-2,6-*tert*-butylphénol et de 0,08 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres et en étuve à 60 °C sous courant d'azote.

La viscosité ML du copolymère est de 31.

La masse moléculaire Mn de ce copolymère, déterminée par la technique SEC, est de 134 000 g/mol et l'Ip est de 1,08.

La microstructure de ce copolymère est déterminée par le NIR :

Le taux massique de motifs 1,4-trans est de 31 %, celui de motifs 1,4-cis est de 27 % et celui de motifs 1,2 est de 42 % (chacun de ces trois taux se rapporte aux unités butadiène).
Le taux massique de styrène est de 26 %.

**Exemple 8 :** Polymère H " témoin " : SBR non fonctionnel

Dans un réacteur de 100 litres, maintenu sous une pression d'azote d'environ 2 bars, contenant 48.0 kg de cyclohexane, sont injectés 2.39 kg de styrène et 6.46 kg de butadiène ainsi que 774 mL d'une solution de *tert*-amylate de sodium à 30,4 $mmol.L^{-1}$ dans le cyclohexane. Après neutralisation des impuretés dans la solution à polymériser par addition de s-butyllithium, sont ajoutés 526 mL de s-BuLi à 0,0798 $mol.L^{-1}$ dans le cyclohexane. La polymérisation est conduite à 45°C.

Après 110 min, le taux de conversion des monomères atteint 90 %. Ce taux est déterminé par pesée d'un extrait séché à 110 °C, sous la pression réduite de 200 mmHg.

0,53 L d'une solution de méthanol à 0,12 $mol.L^{-1}$ dans le toluène est alors ajoutée. La viscosité inhérente, laquelle est mesurée à 25 °C à 0,1 g/dl dans le toluène, est de 1.68 dl/g. Le polymère est alors soumis à un traitement antioxydant par addition de 0,2 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres et en étuve à 60 °C sous courant d'azote.

La viscosité ML du copolymère est de 51

La masse moléculaire Mn de ce copolymère, déterminée par la technique SEC, est de 160 000 g/mol et l'Ip

est de 1,11.

La microstructure de ce copolymère H est déterminée par le NIR :

Le taux massique de motifs 1,4-trans est de 31 %, celui de motifs 1,4-cis est de 28 % et celui de motifs 1,2 est de 41 % (chacun de ces trois taux se rapporte aux unités butadiène).
Le taux massique de styrène est de 25 %.

**Exemple 9 :** Polymère I conforme à l'invention

Dans un réacteur de 10 litres, maintenu sous une pression d'azote de 2 bars, contenant 4200 grammes de méthylcyclohexane, sont injectés 162 g de styrène et 438 grammes de butadiène ainsi que 0,46 mL de tetrahydrofurfuryl éther. Après neutralisation des impuretés dans la solution à polymériser par addition de n-butyllithium, sont ajoutés 4,5 mmol de n-BuLi. La polymérisation est conduite à 40°C.

Après 70 min, le taux de conversion des monomères atteint 97 %. Ce taux est déterminé par pesée d'un extrait séché à 110 °C, sous la pression réduite de 200 mmHg. Un échantillon témoin est alors prélevé depuis le réacteur puis stoppé avec un excès de méthanol par rapport au lithium. La viscosité inhérente (viscosité " initiale "), laquelle est mesurée à 25 °C à 0,1 g/dl dans le toluène, est de 1.17 dl/g. La masse moléculaire Mn de ce témoin, déterminée par la technique SEC, est de 94 000 g/mol, l'Ip est de 1,12.

La température du réacteur est augmentée à 60°C et sont alors injectés 10.8 mL d'une solution à 0.2 $mol.L^{-1}$ de poly(ethylene glycol) diglycidyl ether (de numéro CAS [26403-72-5] commercialisé par la société Aldrich sous la référence 475696 avec une Mn indiquée par ce fournisseur de 526 $g.mol^{-1}$) dans le toluène préalablement désaéré.

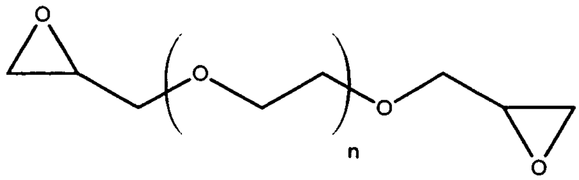

Après 60 min de réaction à 60°C, la réaction est stoppée par ajout de 6,8 mL de méthanol. La viscosité inhérente " finale " mesurée est de 1,77 dl/g. Le saut de viscosité, défini comme le rapport de ladite viscosité " finale " sur ladite viscosité " initiale ", est ici de 1,51. La viscosité ML du polymère ainsi couplé est de 52.

Le copolymère diénique à blocs I est alors soumis à un traitement antioxydant par addition de 0,8 parties pour cent parties d'élastomères (pce) de 4,4'-méthylène-bis-2,6-*tert*-butylphénol et de 0,2 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres à 100°C puis en étuve à 60 °C sous courant d'azote.

La masse moléculaire Mn de ce copolymère à blocs I, déterminée par la technique SEC, est de 156 000 g/mol et l'Ip est de 1,30. La décomposition mathématique du chromatogramme SEC en somme de gaussiennes (en faisant l'hypothèse que les coefficients de réponse du détecteur réfractométrique (dn/dc) des différentes populations sont identiques) indique la présence d'une population majoritaire (75 % en poids) de chaînes couplées et d'une population minoritaire (25 % en poids) de chaînes linéaires non couplées.

Le taux de fonctions $OCH_2$ déterminé par RMN $^1H$ pour le copolymère I est de 52 mmol/kg ce qui, compte tenu de la masse moléculaire Mn théorique du polymère diénique et de celle du bloc polyéthylène glycol correspond à un taux de fonctionnalisation par le bloc polyéther d'environ 75%.

La microstructure de ce copolymère I est déterminée par le NIR :

Le taux massique de motifs 1,4-trans est de 21 %, celui de motifs 1,4-cis est de 19 % et celui de motifs 1,2 est de 60 % (chacun de ces trois taux se rapporte aux unités butadiène).
Le taux massique de styrène est de 27 %.

**Exemple 10 :** Polymère J " témoin " : SBR fonctionnalisé par une fonction SiOH bout de chaîne

Dans un réacteur de 100 litres, maintenu sous une pression d'azote d'environ 2 bars, contenant 48.9 kg de méthylcyclohexane, sont injectés 1.93 kg de styrène et 5.21 kg de butadiène ainsi que 675 mL d'une solution de tetrahydrofurfuryl éther à 0,065 $mol.L^{-1}$ dans le méthylcyclohexane. Après neutralisation des impuretés dans la solution à polymériser par addition de n-butyllithium, est ajouté 490 mL de n-BuLi à 0,065 $mol.L^{-1}$ dans le méthylcyclohexane. La polymérisation est conduite à 45°C.

Après 45 min, le taux de conversion des monomères atteint 92%. Ce taux est déterminé par pesée d'un extrait séché à 110 °C, sous la pression réduite de 200 mmHg.

635 mL de solution d'hexaméthylcyclotrisiloxane à 0.0253 mol.$L^{-1}$ dans le méthylcyclohexane sont alors ajouté. Après 30 min à 60°C, le polymère est soumis à un traitement antioxydant par addition de 0,8 parties pour cent parties d'élastomères (pce) de 4,4'-méthylène-bis-2,6-*tert*-butylphénol et de 0,2 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres et en étuve à 60 °C sous courant d'azote.

La viscosité ML du copolymère est de 58.

La masse moléculaire Mn de ce copolymère, déterminée par la technique SEC, est de 161 000 g/mol et l'Ip est de 1,09.

La microstructure de ce copolymère J est déterminée par le NIR :

Le taux massique de motifs 1,4-trans est de 20 %, celui de motifs 1,4-cis est de 19 % et celui de motifs 1,2 est de 61 % (chacun de ces trois taux se rapporte aux unités butadiène).
Le taux massique de styrène est de 25 %.

Le taux de fonctions $(CH_3)_2Si$ déterminé par RMN $^1H$ pour ce copolymère est de 3,73 mmol/kg.

**Exemple 11 :** Polymère K " témoin " : SBR non fonctionnel

Dans un réacteur de 100 litres, maintenu sous une pression d'azote d'environ 2 bars, contenant 48.9 kg de méthylcyclohexane, sont injectés 1.93 kg de styrène et 5.21 kg de butadiène ainsi que 675 mL d'une solution de tetrahydrofurfuryl à 0,065 mol.$L^{-1}$ dans le méthylcyclohexane. Après neutralisation des impuretés dans la solution à polymériser par addition de n-butyllithium, est ajouté 505 mL de n-BuLi à 0,065 mol.$L^{-1}$ dans le méthylcyclohexane. La polymérisation est conduite à 45°C.

Après 45 min, le taux de conversion des monomères atteint 92%. Ce taux est déterminé par pesée d'un extrait séché à 110 °C, sous la pression réduite de 200 mmHg.

0,55 L d'une solution de méthanol à 0,15 mol.$L^{-1}$ dans le toluène est alors ajoutée. La viscosité inhérente, laquelle est mesurée à 25 °C à 0,1 g/dl dans le toluène, est de 1.57 dl/g. Le polymère est alors soumis à un traitement antioxydant par addition de 0,8 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres et en étuve à 60 °C sous courant d'azote.

La viscosité ML du copolymère est de 54.

La masse moléculaire Mn de ce copolymère, déterminée par la technique SEC, est de 158 000 g/mol et l'Ip est de 1,09.

La microstructure de ce copolymère K est déterminée par le NIR :

Le taux massique de motifs 1,4-trans est de 20 %, celui de motifs 1,4-cis est de 19 % et celui de motifs 1,2 est de 61 % (chacun de ces trois taux se rapporte aux unités butadiène).
Le taux massique de styrène est de 26 %.

## II Exemples comparatifs de compositions de caoutchouc

### A) Mesures et tests utilisés

Techniques expérimentales utilisées pour la caractérisation avant et après cuisson des compositions de caoutchouc :

**(a)** la viscosité Mooney ML (1+4) à 100° C: mesurée selon la norme ASTM: D-1646, intitulée " Mooney " dans les tableaux,
**(b)** la dureté SHORE A: mesure effectuée selon la norme DIN 53505,
**(c)** les modules d'allongement à 300 % (MA 300), à 100 % (MA 100) et à 10 % (MA 10): mesures effectuées selon la norme ISO 37,
**(d)** l'indice de cassage Scott à 23°C: on détermine la contrainte à la rupture (FR) en MPa et l'allongement à la rupture (AR) en %. Toutes ces mesures de traction sont effectuées dans les conditions normales de température et d'hygrométrie selon la norme ISO 37.

**(e)** la perte à 60°C : une perte d'énergie à 60 °C par rebond à énergie imposée mesurée au sixième choc. La valeur, exprimée en %, est la différence entre l'énergie fournie et l'énergie restituée, rapportée à l'énergie fournie.

**(f)** Les propriétés dynamiques Delta G* et tan(δ)max sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 $mm^2$ de section), soumis à une sollicitation sinusoïdale en cisaillement simple alterné, à la fréquence de 10 Hz, dans les conditions normales de température (23°C) selon la norme ASTM D 1349-99. On effectue un balayage en amplitude de déformation crête-crête de 0,1 à 50% (cycle aller), puis de 50% à 0,1% (cycle retour). Les résultats exploités sont le module complexe de cisaillement dynamique (G*) et le facteur de perte tan δ. Pour le cycle retour, on indique la valeur maximale de tan δ observée (tan(δ)max), ainsi que l'écart de module complexe (Delta G*) entre les valeurs à 0,1 et 50% de déformation (effet Payne).

<u>**B)** Les exemples</u>

**Exemple 1 :**

**Compositions comprenant soit un élastomère possédant un bloc polyéther en milieu de chaîne selon l'invention, soit un élastomère non conforme à l'invention (Tg = -38°C)**

Dans cet exemple, les quatre élastomères SBR B, SBR C, SBR G et SBR H ont été utilisés pour la préparation de compositions de caoutchouc B, C, G et H de type bande de roulement, comprenant chacune de la silice à titre de charge renforçante.

Chacune de ces compositions B, C, G et H présente la formulation suivante (exprimée en pce : parties pour cent parties d'élastomère) :

| | |
|---|---|
| Elastomère | 100 |
| Silice (1) | 80 |
| N234 | 1 |
| Huile MES (5) | 15 |
| Résine (6) | 15 |
| Agent de liaison (2) | 6.4 |
| ZnO | 2.5 |
| Acide stéarique | 2 |
| Antioxydant (3) | 1.9 |
| Cire anti-ozone " C32ST " (7) | 1.5 |
| Diphénylguanidine | 1.5 |
| Soufre | 1.2 |
| Sulfénamide (4) | 2 |

Avec :

(1) = Silice " Zeosil 1165 MP " de la société Rhodia,

(2) = Agent de liaison " Si69 " de la société Degussa,

(3) = N-(1,3-diméthylbutyl)-N'-phényl-p-phénylènediamine,

(4) = N-cyclohexyl-2-benzothiazylsulfénamide,

(5) = Catenex® SNR de la société Shell,

(6) = Résine Dercolyte L120 de la société DRT ou Sylvagum TR7125C de la société Arizona,

(7) = Cire anti-ozone de la Société Repsol

Chacune des compositions suivantes est réalisée, dans un premier temps de travail thermo-mécanique, par deux étapes séparées par une phase de refroidissement, puis, dans un second temps de finition, par un travail mécanique.

On introduit successivement, dans un mélangeur interne de laboratoire de type "Banbury', dont la capacité est

de 400 $cm^3$, qui est rempli à 70% et dont la température initiale est d'environ 90°C, l'élastomère, les deux tiers de la charge renforçante, l'agent de couplage et la diphénylguanidine, puis, environ une minute plus tard, le reste de la charge renforçante, l'huile MES, la résine, l'acide stéarique et la cire anti-ozone " C32ST ".

On conduit la première étape de travail thermo-mécanique pendant 4 à 5 minutes, jusqu'à une température maximale de tombée de 160°C environ. Le bloc élastomère est alors récupéré et refroidi.

Puis on conduit une seconde étape de travail thermo-mécanique dans le même mélangeur pendant une durée de 3 à 4 minutes, avec ajout du monoxyde de zinc et de l'anti-oxydant, jusqu'à une température maximale de tombée de 160°C environ.

Le premier temps précité de travail thermo-mécanique est ainsi réalisé, étant précisé que la vitesse moyenne des palettes lors de ce premier temps est de 45 t/min.

On récupère le mélange ainsi obtenu, on le refroidit puis, dans un mélangeur externe (homo-fmisseur), on ajoute le soufre et la sulfénamide à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Les résultats sont consignés dans le tableau 1 ci-après.

Tableau 1 :

| Composition | B | C | G | H |
|---|---|---|---|---|
| Elastomère | SBR B | SBR C | SBR G | SBR H |
| ML (1+4) à 100°C (élastomère) | 34 | 53 | 31 | 51 |
| Propriétés à l'état non réticulé | | | | |
| ML (1+4) à 100°C (" Mooney mélange ") | 54 | 68 | 66 | 83 |
| Propriétés à l'état réticulé | | | | |
| Shore A | 56.8 | 57.6 | 57.9 | 59.5 |
| MA10 | 3.54 | 3.54 | 3.47 | 3.73 |
| MA100 | 1.63 | 1.72 | 1.52 | 1.61 |
| MA300 | 2.33 | 2.49 | 2.09 | 2.21 |
| MA300/MA100 | 1.43 | 1.45 | 1.38 | 1.37 |
| Indice de cassage Scott à 23°C | | | | |
| Fr (MPa) | 22.8 | 23.7 | 22.3 | 22.1 |
| Ar (%) | 528 | 512 | 557 | 521 |
| Pertes 60°C (%) | 26.2 | 23.0 | 27.1 | 24.8 |
| Propriétés dynamiques en fonction de la déformation | | | | |
| Delta G* (MPa) à 23°C | 0.57 | 0.69 | 1.27 | 1.08 |
| Tan (δ) max à 23°C | 0.187 | 0.193 | 0.259 | 0.241 |

On notera que la composition B selon l'invention présente une valeur de Mooney " mélange " qui est inférieure à celle de la composition G à base d'un élastomère non fonctionnel. La composition C selon l'invention présente une valeur de Mooney " mélange " inférieure à celle de la composition H à base d'un élastomère non fonctionnel. Les élastomères B et C comportant un bloc polyéther en milieu de chaîne selon l'invention permettent d'améliorer la mise en oeuvre respectivement par rapport aux élastomères non fonctionnels G et H.

Concernant les propriétés à l'état réticulé, on notera que le rapport MA300/MA100 de la composition B selon l'invention est légèrement supérieur à celui de la composition G à base d'un élastomère non fonctionnel. Le rapport MA300/MA100 de la composition C selon l'invention est légèrement supérieur à celui de la composition H à base d'un élastomère non fonctionnel. Les élastomères B et C comportant un bloc polyéther en milieu de chaîne selon l'invention permettent d'améliorer légèrement le renforcement respectivement par rapport aux élastomères non fonctionnels G et H.

Concernant les propriétés dynamiques, on notera que les valeurs de Delta G* et de $\tan\delta_{max}$ de la composition B selon l'invention sont nettement inférieures à celles de la composition G à base d'un élastomère non fonctionnel. Les valeurs de Delta G* et de $\tan\delta_{max}$ de la composition C selon l'invention sont nettement inférieures à celles de la composition H à base d'un élastomère non fonctionnel. Les élastomères B et C comportant un bloc polyéther en milieu de

chaîne selon l'invention permettent d'améliorer les propriétés hystérétiques (Delta G*, $\tan\delta_{max}$) respectivement par rapport aux élastomères non fonctionnels G et H.

En d'autres termes, la composition B selon l'invention à base d'un élastomère qui comprend un bloc polyéther en milieu de chaîne présente des propriétés de caoutchouterie à l'état non réticulé et à l'état réticulé qui sont améliorées par rapport à celles de la composition G à base d'élastomère non fonctionnel du fait d'une aptitude à la mise en oeuvre améliorée et du fait d'une hystérèse nettement réduite. La composition C selon l'invention à base d'un élastomère qui comprend un bloc polyéther en milieu de chaîne présente des propriétés de caoutchouterie à l'état non réticulé et à l'état réticulé qui sont améliorées par rapport à celles de la composition H à base d'élastomère non fonctionnel du fait d'une aptitude à la mise en oeuvre améliorée et du fait d'une hystérèse nettement réduite.

**Exemple 2 :**

**Compositions comprenant soit un élastomère possédant un bloc polyéther en milieu de chaîne selon l'invention,** soit un élastomère non conforme à l'invention (Tg = -38°C)

Dans cet exemple, les quatre élastomères SBR B, SBR D, SBR E et SBR F ont été utilisés pour la préparation de compositions de caoutchouc B, D, E et F de type bande de roulement, comprenant chacune de la silice à titre de charge renforçante.

Chacune de ces compositions B, D, E et F présente la formulation suivante (exprimée en pce : parties pour cent parties d'élastomère) :

| | |
|---|---|
| Elastomère | 100 |
| Silice (1) | 80 |
| N234 | 1 |
| Huile MES (5) | 15 |
| Résine (6) | 15 |
| Agent de liaison (2) | 6.4 |
| ZnO | 2.5 |
| Acide stéarique | 2 |
| Antioxydant (3) | 1.9 |
| Cire anti-ozone " C32ST " (7) | 1.5 |
| Diphénylguanidine | 1.5 |
| Soufre | 1.2 |
| Sulfénamide (4) | 2 |

Avec :

(1) = Silice " Zeosil 1165 MP " de la société Rhodia,

(2) = Agent de liaison " Si69 " de la société Degussa,

(3) = N-(1,3-diméthylbutyl)-N'-phényl-p-phénylènediamine,

(4) = N-cyclohexyl-2-benzothiazylsulfénamide,

(5) = Catenex® SNR de la société Shell,

(6) = Résine Dercolyte L120 de la société DRT ou Sylvagum TR7125C de la société Arizona,

(7) = Cire anti-ozone de la Société Repsol

Chacune des compositions suivantes est réalisée, dans un premier temps de travail thermo-mécanique, par deux étapes séparées par une phase de refroidissement, puis, dans un second temps de finition, par un travail mécanique.

On introduit successivement, dans un mélangeur interne de laboratoire de type "Banbury', dont la capacité est de 400 $cm^3$, qui est rempli à 70% et dont la température initiale est d'environ 90°C, l'élastomère, les deux tiers de la charge renforçante, l'agent de couplage et la diphénylguanidine, puis, environ une minute plus tard, le reste de la charge

renforçante, l'huile MES, la résine, l'acide stéarique et la cire anti-ozone " C32ST ".

On conduit la première étape de travail thermo-mécanique pendant 4 à 5 minutes, jusqu'à une température maximale de tombée de 160°C environ. Le bloc élastomère est alors récupéré et refroidi.

Puis on conduit une seconde étape de travail thermo-mécanique dans le même mélangeur pendant une durée de 3 à 4 minutes, avec ajout du monoxyde de zinc et de l'anti-oxydant, jusqu'à une température maximale de tombée de 160°C environ.

Le premier temps précité de travail thermo-mécanique est ainsi réalisé, étant précisé que la vitesse moyenne des palettes lors de ce premier temps est de 45 t/min.

On récupère le mélange ainsi obtenu, on le refroidit puis, dans un mélangeur externe (homo-finisseur), on ajoute le soufre et la sulfénamide à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Les résultats sont consignés dans le tableau 2 ci-après.

Tableau 2 :

| Composition | B | D | E | F |
|---|---|---|---|---|
| Elastomère | SBR B | SBR D | SBR E | SBR F |
| ML (1+4) à 100°C (élastomère) | 34 | 66 | 31 | 65 |
| Propriétés à l'état non réticulé | | | | |
| ML (1+4) à 100°C (" Mooney mélange ") | 54 | 76 | 97 | 116 |
| Propriétés à l'état réticulé | | | | |
| Shore A | 56.8 | 59.3 | 59.1 | 62.3 |
| MA10 | 3.54 | 3.66 | 3.51 | 4.35 |
| MA100 | 1.63 | 1.78 | 1.70 | 1.78 |
| MA300 | 2.33 | 2.60 | 2.35 | 2.32 |
| MA300/MA100 | 1.43 | 1.46 | 1.38 | 1.30 |
| Indice de cassage Scott à 23°C | | | | |
| Fr (MPa) | 22.8 | 23.9 | 23.3 | 24.8 |
| Ar (%) | 528 | 505 | 504 | 545 |
| Pertes 60°C (%) | 26.2 | 22.1 | 21.0 | 21.5 |
| Propriétés dynamiques en fonction de la déformation | | | | |
| Delta G* (MPa) à 23°C | 0.57 | 0.86 | 0.84 | 1.53 |
| Tan (δ) max à 23°C | 0.187 | 0.218 | 0.222 | 0.260 |

On notera que la composition B selon l'invention présente une valeur de Mooney " mélange " qui est très nettement inférieure à celle de la composition E à base d'un élastomère qui comprend une fonction SiOH en bout de chaîne. La composition D selon l'invention présente une valeur de Mooney " mélange " très nettement inférieure à celle de la composition F à base d'un élastomère qui comprend une fonction SiOH en bout de chaîne. Les élastomères B et D comportant un bloc polyéther en milieu de chaîne selon l'invention permettent d'améliorer très nettement la mise en oeuvre respectivement par rapport aux élastomères E et F qui comprennent une fonction SiOH en bout de chaîne.

Concernant les propriétés à l'état réticulé, on notera que le rapport MA300/MA100 de la composition B selon l'invention est légèrement supérieur à celui de la composition E à base d'un élastomère qui comprend une fonction SiOH en bout de chaîne. Le rapport MA300/MA100 de la composition D selon l'invention est légèrement supérieur à celui de la composition F à base d'un élastomère qui comprend une fonction SiOH en bout de chaîne. Les élastomères B et D comportant un bloc polyéther en milieu de chaîne selon l'invention permettent d'améliorer légèrement le renforcement respectivement par rapport aux élastomères E et F qui comprennent une fonction SiOH en bout de chaîne.

Concernant les propriétés dynamiques, on notera que les valeurs de Delta G* et de $\tan\delta_{max}$ de la composition B selon l'invention sont inférieures à celles de la composition E à base d'un élastomère qui comprend une fonction SiOH en bout de chaîne. Les valeurs de Delta G* et de $\tan\delta_{max}$ de la composition D selon l'invention sont inférieures à celles de la composition F à base d'un élastomère qui comprend une fonction SiOH en bout de chaîne. Les élastomères B et

D comportant un bloc polyéther en milieu de chaîne selon l'invention permettent d'améliorer les propriétés hystérétiques (Delta G*, $\tan\delta_{max}$) respectivement par rapport aux élastomères E et F qui comprennent une fonction SiOH en bout de chaîne.

En d'autres termes, la composition B selon l'invention à base d'un élastomère qui comprend un bloc polyéther en milieu de chaîne présente des propriétés de caoutchouterie à l'état non réticulé et à l'état réticulé qui sont améliorées par rapport à celles de la composition E à base d'élastomère qui comprend une fonction SiOH en bout de chaîne du fait d'une aptitude à la mise en oeuvre très nettement améliorée et du fait d'une hystérèse réduite. La composition D selon l'invention à base d'un élastomère qui comprend un bloc polyéther en milieu de chaîne présente des propriétés de caoutchouterie à l'état non réticulé et à l'état réticulé qui sont améliorées par rapport à celles de la composition F à base d'élastomère qui comprend une fonction SiOH en bout de chaîne du fait d'une aptitude à la mise en oeuvre très nettement améliorée et du fait d'une hystérèse réduite.

**Exemple 3 :**

**Compositions comprenant soit un élastomère possédant un bloc polyéther en milieu de chaîne selon l'invention, soit un élastomère non conforme à l'invention (Tg = -25°C)**

Dans cet exemple, les trois élastomères SBR I, SBR J et SBR K ont été utilisés pour la préparation de compositions de caoutchouc I, J, et K de type bande de roulement, comprenant chacune de la silice à titre de charge renforçante.

Chacune de ces compositions I, J, et K présente la formulation suivante (exprimée en pce : parties pour cent parties d'élastomère) :

| | |
|---|---|
| Elastomère | 100 |
| Silice (1) | 80 |
| N234 | 1 |
| Huile MES (5) | 15 |
| Résine (6) | 15 |
| Agent de liaison (2) | 6.4 |
| ZnO | 2.5 |
| Acide stéarique | 2 |
| Antioxydant (3) | 1.9 |
| Cire anti-ozone " C32ST " (7) | 1.5 |
| Diphénylguanidine | 1.5 |
| Soufre | 1.2 |
| Sulfénamide (4) | 2 |

Avec :

(1) = Silice " Zeosil 1165 MP " de la société Rhodia,

(2) = Agent de liaison " Si69 " de la société Degussa,

(3) = N-(1,3-diméthylbutyl)-N'-phényl-p-phénylènediamine,

(4) = N-cyclohexyl-2-benzothiazylsulfénamide,

(5) = Catenex® SNR de la société Shell,

(6) = Résine Dercolyte L120 de la société DRT ou Sylvagum TR7125C de la société Arizona,

(7) = Cire anti-ozone de la Société Repsol

Chacune des compositions suivantes est réalisée, dans un premier temps, par un travail thermo-mécanique, puis, dans un second temps de finition, par un travail mécanique.

On introduit successivement, dans un mélangeur interne de laboratoire de type "Banbury', dont la capacité est

de 400 $cm^3$, qui est rempli à 70% et dont la température initiale est d'environ 90°C, l'élastomère, les deux tiers de la charge renforçante, l'agent de couplage et la diphénylguanidine, puis, environ une minute plus tard, le reste de la charge renforçante, l'huile MES, la résine, l'antioxydant, l'acide stéarique et la cire anti-ozone " C32ST ", puis, environ deux minutes plus tard le monoxyde de zinc.

On conduit l'étape de travail thermo-mécanique pendant 4 à 5 minutes, jusqu'à une température maximale de tombée de 160°C environ.

Le premier temps précité de travail thermo-mécanique est ainsi réalisé, étant précisé que la vitesse moyenne des palettes lors de ce premier temps est de 45 t/min.

On récupère le mélange ainsi obtenu, on le refroidit puis, dans un mélangeur externe (homo-fmisseur), on ajoute le soufre et la sulfénamide à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Les résultats sont consignés dans le tableau 3 ci-après.

Tableau 3 :

| Composition | I | J | K |
|---|---|---|---|
| Elastomère | SBR I | SBR J | SBR K |
| ML (1+4) à 100°C (élastomère) | 52 | 58 | 54 |
| Propriétés à l'état non réticulé | | | |
| MS (1+4) à 100°C (" Mooney mélange ") | 61 | 108 | 78 |
| Propriétés à l'état réticulé | | | |
| Shore A | 64.1 | 63.9 | 70.2 |
| MA10 | 5.30 | 4.64 | 7.05 |
| MA100 | 2.22 | 2.23 | 2.16 |
| MA300 | 2.70 | 2.78 | 2.21 |
| MA300/MA100 | 1.21 | 1.25 | 1.02 |
| Indice de cassage Scott à 23°C | | | |
| Fr (MPa) | 19.4 | 19.7 | 18.0 |
| Ar (%) | 437 | 413 | 490 |
| Pertes 60°C (%) | 28.9 | 21.8 | 36.3 |
| Propriétés dynamiques en fonction de la déformation | | | |
| Delta G* (MPa) à 23°C | 1.67 | 1.67 | 6.58 |
| Tan (δ) max à 23°C | 0.333 | 0.367 | 0.476 |

On notera que la composition I selon l'invention présente une valeur de Mooney " mélange " qui est très nettement inférieure à celle de la composition J à base d'un élastomère qui comprend une fonction SiOH en bout de chaîne. La composition I selon l'invention présente une valeur de Mooney " mélange " qui est inférieure à celle de la composition K à base d'un élastomère non fonctionnel. L'élastomère comportant un bloc polyéther en milieu de chaîne selon l'invention permet d'améliorer la mise en oeuvre par rapport à l'élastomère non fonctionnel d'une part et par rapport à l'élastomère fonctionnel SiOH en bout de chaîne d'autre part.

Concernant les propriétés à l'état réticulé, on notera que le rapport MA300/MA100 de la composition I selon l'invention est équivalent à celui de la composition J à base d'un élastomère qui comprend une fonction SiOH en bout de chaîne. La composition I selon l'invention présente un rapport MA300/MA100 qui est supérieur à celui de la composition K à base d'un élastomère non fonctionnel. L'élastomère comportant un bloc polyéther en milieu de chaîne selon l'invention permet d'améliorer le renforcement par rapport à l'élastomère non fonctionnel.

Concernant les propriétés dynamiques, on notera que la valeur de Delta G* de la composition I selon l'invention est équivalente à celle de la composition J à base d'un élastomère qui comprend une fonction SiOH en bout de chaîne, alors que la valeur de $\tan\delta_{max}$ de la composition I selon l'invention est inférieure à celle de $\tan\delta_{max}$ de la composition J.

La composition I selon l'invention présente des valeurs de Delta G* et de $\tan\delta_{max}$ inférieures à celles de la composition K à base d'un élastomère non fonctionnel. L'élastomère comportant un bloc polyéther en milieu de chaîne

selon l'invention permet d'améliorer les propriétés hystérétiques (Delta G*, $\tan\delta_{max}$) par rapport à l'élastomère non fonctionnel.

En d'autres termes, la composition 1 selon l'invention à base d'élastomère qui comprend un bloc polyéther en milieu de chaîne présente des propriétés de caoutchouterie à l'état non réticulé et à l'état réticulé qui sont améliorées par rapport à celles de la composition J à base d'élastomère comprenant une fonction SiOH en bout de chaîne du fait d'une aptitude à la mise en oeuvre améliorée d'une part et par rapport à celles de la composition K à base d'élastomère non fonctionnel du fait d'une hystérèse réduite d'autre part.

## Revendications

1. Procédé de préparation d'un copolymère à blocs dont l'un au moins desdits blocs est constitué d'un élastomère diénique et un autre au moins desdits blocs est constitué d'un polyéther **caractérisé en ce qu'**il comprend une étape de réaction d'un élastomère diénique vivant sur un agent de fonctionnalisation de formule générale I ayant un bloc polyéther fonctionnel de masse moléculaire moyenne en nombre sensiblement de 100 à 5000 g/mol,

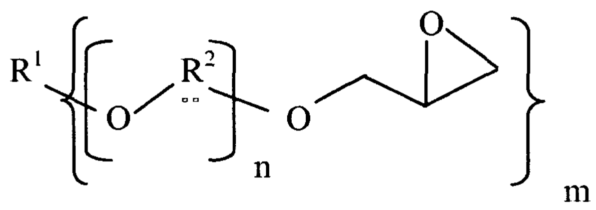

Formule I

dans laquelle,
$R^1$ représente un dérivé hydrocarboné alkyle en $C_1$ - $C_{15}$, aryle en $C_6$ - $C_{15}$ ou alkylaryl en $C_7$-$C_{15}$, de valence m,
$R^2$ représente un radical alkylène en $C_1$-$C_{10}$,
n est un nombre supérieur à 1,
m est un nombre entier de 1 à 4.

2. Procédé selon la revendication 1 **caractérisé en ce que** dans la formule générale I, m vaut 2.

3. Procédé selon la revendication 1 ou 2, **caractérisé en ce que** dans la formule générale I, $R^2$ représente le radical

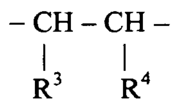

dans lequel $R^3$ et $R^4$ sont, indépendamment l'un de l'autre, un atome d'hydrogène ou un radical alkyle en $C_1$-$C_4$.

4. Procédé selon la revendication 3, **caractérisé en ce que** dans la formule générale I, $R^2$ représente le radical éthylène.

5. Procédé selon la revendication 4, **caractérisé en ce que** l'agent de fonctionnalisation de formule générale I est le polyéthylène glycol diglycidyl éther.

6. Procédé selon selon l'une quelconque des revendications 1 à 5, **caractérisé en ce que** préalablement à l'étape de réaction d'un élastomère diénique vivant sur un agent de fonctionnalisation de formule générale I, le procédé comprend une étape de préparation du polymère vivant par polymérisation anionique d'au moins un monomère diénique en présence d'un initiateur organométallique monofonctionnel.

7. Procédé selon l'une quelconque des revendications 1 à 6, **caractérisé en ce qu'il** comprend aussi une étape de couplage et/ou d'étoilage et/ou encore de fonctionnalisation supplémentaire avec un agent de fonctionnalisation différent de celui de formule générale I.

**8.** Copolymère diénique à blocs dont l'un au moins desdits blocs est constitué d'un élastomère diénique et un autre au moins desdits blocs est constitué d'un polyéther de masse moléculaire moyenne en nombre sensiblement de 100 à 5000 g/mol, obtenu par le procédé décrit dans les revendications 1 à 7.

**9.** Copolymère diénique à blocs selon la revendication 8, **caractérisé en ce qu'**il comprend trois blocs, le bloc constitué d'un polyéther étant situé en milieu de chaîne polymérique entre deux blocs constitués d'un élastomère diénique.

**10.** Copolymère diénique à blocs selon la revendication 8 ou 9, **caractérisé en ce que** l'élastomère diénique est un copolymère styrène/butadiène.

**11.** Composition de caoutchouc renforcée, utilisable pour la fabrication d'une enveloppe de pneumatique, à base d'au moins un copolymère diénique à blocs obtenu selon le procédé décrit dans les revendications 1 à 7 et destiné à interagir avec la charge renforçante.

**12.** Composition de caoutchouc selon la revendication 11, **caractérisée en ce qu'**elle comprend majoritairement une charge inorganique renforçante à titre de charge renforçante.

**13.** Composition de caoutchouc selon la revendication 12 **caractérisée en ce que** la charge renforçante est constituée par la charge inorganique renforçante.

**14.** Composition de caoutchouc selon la revendication 12 ou 13 **caractérisée en ce que** la charge inorganique renforçante est de la silice.

**15.** Composition de caoutchouc selon la revendication 1, 12 ou 14, **caractérisée en ce que** la charge renforçante comprend du noir de carbone.

**16.** Composition de caoutchouc selon l'une quelconque des revendications 11 à 15, **caractérisée en ce qu'**elle comprend en coupage avec ledit copolymère diénique à blocs un au moins des polymères choisis parmi le caoutchouc naturel, les élastomères diéniques synthétiques, les élastomères diéniques synthétiques couplés et/ou étoilés et/ou partiellement ou entièrement fonctionnalisés par un agent de fonctionnalisation différent de celui représenté par la formule générale I, les élastomères synthétiques autres que diéniques.

**17.** Pneumatique, **caractérisée en ce qu'**elle incorpore dans au moins un de ses éléments constitutifs une composition de caoutchouc selon une des revendications 11 à 16.

**18.** Bande de roulement pour pneumatique selon la revendication 17, **caractérisée en ce qu'**elle comprend une composition de caoutchouc selon une des revendications 11 à 16.

## Claims

**1.** Process for preparing a block copolymer, of which at least one of said blocks is constituted of a diene elastomer and at least another of said blocks is constituted of a polyether, **characterized in that** it comprises a step of reacting a living diene elastomer with a functionalizing agent of general formula I having a functional polyether block of number-average molecular weight approximately from 100 to 5000 g/mol,

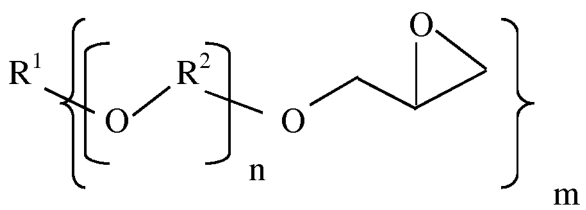

Formula I

in which:

$R^1$ represents a $C_1$ - $C_{15}$ alkyl, $C_6$ - $C_{15}$ aryl or $C_7$-$C_{15}$ alkylaryl hydrocarbon-based derivative of valency m;
$R^2$ represents a $C_1$-$C_{10}$ alkylene radical;
n is a number greater than 1; and
m is an integer from 1 to 4.

**2.** Process according to Claim 1, **characterized in that** in the general formula I, m is equal to 2.

**3.** Process according to Claim 1 or 2, **characterized in that** in the general formula I, R $^2$ represents the

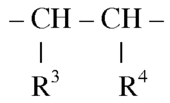

Radical, in which $R^3$ and $R^4$ are, independently of one another, a hydrogen atom or a $C_1$-$C_4$ alkyl radical.

**4.** Process according to Claim 3, **characterized in that** in the general formula I, $R^2$ represents the ethylene radical.

**5.** Process according to Claim 4, **characterized in that** the functionalizing agent of general formula I is polyethylene glycol diglycidyl ether.

**6.** Process according to any one of Claims 1 to 5, **characterized in that** prior to the step of reacting a living diene elastomer with a functionalizing agent of general formula I, the process comprises a step of preparing the living polymer by anionic polymerization of at least one diene monomer in the presence of a monofunctional organometallic initiator.

**7.** Process according to any one of Claims 1 to 6, **characterized in that** it also comprises a step of coupling and/or of star-branching and/or else of supplementary functionalization with a functionalizing agent different from that of general formula I.

**8.** Diene block copolymer, of which at least one of said blocks is constituted of a diene elastomer and at least another of said blocks is constituted of a polyether of number-average molecular weight approximately from 100 to 5000 g/mol, obtained by the process described in Claims 1 to 7.

**9.** Diene block copolymer according to Claim 8, **characterized in that** it comprises three blocks, the block constituted of a polyether being located in the middle of the polymer chain between two blocks constituted of a diene elastomer.

**10.** Diene block copolymer according to Claim 8 or 9, **characterized in that** the diene elastomer is a styrene/butadiene copolymer.

**11.** Reinforced rubber composition, that can be used for the manufacture of a tyre cover, based on at least one diene block copolymer obtained according to the process described in Claims 1 to 7 and intended to interact with the reinforcing filler.

**12.** Rubber composition according to Claim 11, **characterized in that** it comprises predominantly a reinforcing inorganic filler as a reinforcing filler.

**13.** Rubber composition according to Claim 12, **characterized in that** the reinforcing filler is constituted by the reinforcing inorganic filler.

**14.** Rubber composition according to Claim 12 or 13, **characterized in that** the reinforcing inorganic filler is silica.

**15.** Rubber composition according to Claim 11, 12 or 14, **characterized in that** the reinforcing filler comprises carbon black.

**16.** Rubber composition according to any one of Claims 11 to 15, **characterized in that** it comprises, as a blend with said diene block copolymer, at least one of the polymers chosen from natural rubber, synthetic diene elastomers, synthetic diene elastomers that are coupled and/or star-branched and/or partially or completely functionalized by a

functionalizing agent different from that represented by the general formula I, and synthetic elastomers other than diene elastomers.

**17.** Tyre, **characterized in that** it incorporates, in at least one of its constituent components, a rubber composition according to one of Claims 11 to 16.

**18.** Tread for a tyre according to Claim 17, **characterized in that** it comprises a rubber composition according to one of Claims 11 to 16.

**Patentansprüche**

**1.** Verfahren zur Herstellung eines Blockcopolymers, wobei mindestens einer der Blöcke aus einem Dienelastomer besteht und mindestens ein anderer der Blöcke aus einem Polyether besteht, **dadurch gekennzeichnet, dass** es einen Schritt der Umsetzung eines lebenden Dienelastomers mit einem Funktionalisierungsmittel der allgemeinen Formel I mit einem funktionellen Polyetherblock mit einem zahlenmittleren Molekulargewicht von ungefähr 100 bis 5000 g/mol umfasst,

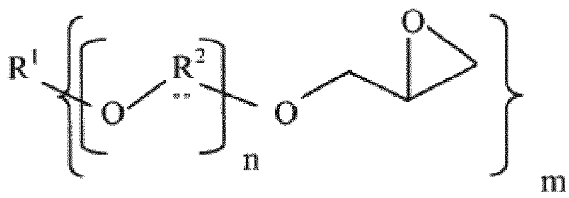

Formel I

worin
$R^1$ für ein $C_1$-$C_{15}$-Alkyl-, $C_6$-$C_{15}$-Aryl- oder $C_7$-$C_{15}$-Alkylarylkohlenwasserstoffderivat mit der Wertigkeit m steht,
$R^2$ für einen $C_1$-$C_{10}$-Alkylenrest steht,
n für eine Zahl größer 1 steht und
m für eine ganze Zahl von 1 bis 4 steht.

**2.** Verfahren nach Anspruch 1, **dadurch gekennzeichnet, dass** in der allgemeinen Formel I m gleich 2 ist.

**3.** Verfahren nach Anspruch 1 oder 2, **dadurch gekennzeichnet, dass** in der allgemeinen Formel I $R^2$ für den Rest

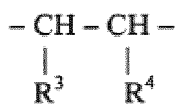

steht, wobei $R^3$ und $R^4$ unabhängig voneinander für ein Wasserstoffatom oder einen $C_1$-$C_4$-Alkylrest stehen.

**4.** Verfahren nach Anspruch 3, **dadurch gekennzeichnet, dass** in der allgemeinen Formel I $R^2$ für den Ethylenrest steht.

**5.** Verfahren nach Anspruch 4, **dadurch gekennzeichnet, dass** es sich bei dem Funktionalisierungsmittel der allgemeinen Formel I um Polyethylenglykoldiglycidylether handelt.

**6.** Verfahren nach einem der Ansprüche 1 bis 5, **dadurch gekennzeichnet, dass** das Verfahren vor dem Schritt der Umsetzung eines lebenden Dienelastomers mit einem Funktionalisierungsmittel der allgemeinen Formel I einen Schritt der Herstellung des lebenden Polymers durch anionische Polymerisation mindestens eines Dienmonomers in Gegenwart eines monofunktionellen metallorganischen Initiators umfasst.

7. Verfahren nach einem der Ansprüche 1 bis 6, **dadurch gekennzeichnet, dass** es außerdem einen Schritt der Kupplung und/oder Sternverzweigung und/oder zusätzlichen Funktionalisierung mit einem anderen Funktionalisierungsmittel als demjenigen der allgemeinen Formel I umfasst.

8. Dienblockcopolymer, wobei mindestens einer der Blöcke aus einem Dienelastomer besteht und mindestens ein anderer der Blöcke aus einem Polyether mit einem zahlenmittleren Molekulargewicht von ungefähr 100 bis 5000 g/mol besteht, erhalten durch das in den Ansprüchen 1 bis 7 beschriebene Verfahren.

9. Dienblockcopolymer nach Anspruch 8, **dadurch gekennzeichnet, dass** es drei Blöcke umfasst, wobei der aus einem Polyether bestehende Block sich in der Mitte der Polymerkette zwischen zwei aus einem Dienelastomer bestehenden Blöcken befindet.

10. Dienblockcopolymer nach Anspruch 8 oder 9, **dadurch gekennzeichnet, dass** es sich bei dem Dienelastomer um ein Styrol-Butadien-Copolymer handelt.

11. Verstärkte Kautschukzusammensetzung, die zur Herstellung eines Reifenmantels geeignet ist, auf Basis von mindestens einem nach dem in den Ansprüchen 1 bis 7 beschriebenen Verfahren erhaltenen und zur Wechselwirkung mit dem verstärkenden Füllstoff vorgesehenen Dienblockcopolymer.

12. Kautschukzusammensetzung nach Anspruch 11, **dadurch gekennzeichnet, dass** sie als verstärkenden Füllstoff hauptsächlich einen verstärkenden anorganischen Füllstoff umfasst.

13. Kautschukzusammensetzung nach Anspruch 12, **dadurch gekennzeichnet, dass** der verstärkende Füllstoff aus dem verstärkenden anorganischen Füllstoff besteht.

14. Kautschukzusammensetzung nach Anspruch 12 oder 13, **dadurch gekennzeichnet, dass** es sich bei dem verstärkenden anorganischen Füllstoff um Kieselsäure handelt.

15. Kautschukzusammensetzung nach Anspruch 11, 12 oder 14, **dadurch gekennzeichnet, dass** der versärkende Füllstoff Ruß umfasst.

16. Kautschukzusammensetzung nach einem der Ansprüche 11 bis 15, **dadurch gekennzeichnet, dass** sie in Abmischung mit dem Dienblockcopolymer mindestens eines der unter Naturkautschuk, synthetischen Dienelastomeren, gekuppelten und/oder sternverzweigten und/oder teilweise oder vollständig mit einem anderen Funktionalisierungsmittel als demjenigen, das durch die allgemeine Formel I wiedergegeben ist, funktionalisierten synthetischen Dienelastomeren und anderen synthetischen Elastomeren als Dienelastomeren ausgewählten Polymere umfasst.

17. Reifen, **dadurch gekennzeichnet, dass** er in mindestens einem seiner Aufbauelemente eine Kautschukzusammensetzung nach einem der Ansprüche 11 bis 16 enthält.

18. Lauffläche für einen Reifen nach Anspruch 17, **dadurch gekennzeichnet, dass** sie eine Kautschukzusammensetzung nach einem der Ansprüche 11 bis 16 umfasst.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5066721 A
- EP 0778311 B1
- EP 1127909 B1
- US 6518369 B
- FR 2250774
- WO 03016387 A
- EP 735088 A
- EP 810258 A
- WO 9928376 A
- WO 2006069792 A
- WO 2006069793 A
- WO 9637547 A
- US 3842111 A
- US 3873489 A
- US 3978103 A
- US 3997581 A
- US 4002594 A
- US 4072701 A
- US 4129585 A
- US 5580919 A
- US 5583245 A
- US 5650457 A
- US 5663358 A
- US 5663395 A
- US 5663396 A
- US 5674932 A
- US 5675014 A
- US 5684171 A
- US 5684172 A
- US 5696197 A
- US 5708053 A
- US 5892085 A
- EP 1043357 A
- WO 03002648 A
- US 20050016651 A
- WO 03002649 A
- US 20050016650 A
- WO 02083782 A
- US 20040132880 A
- WO 0230939 A
- US 6774255 B
- WO 02310415 A
- US 2004051210 A
- WO 2006125532 A
- WO 2006125533 A
- WO 2006125534 A
- WO 0210269 A


### Littérature non-brevet citée dans la description


- **Brunauer-Emmet-Teller.** *The Journal of the American Chemical Society,* Février 1938, vol. 60, 309
- **Vilmin, F. ; Dussap, C. ; Coste, N.** *Applied Spectroscopy,* 2006, vol. 60, 619-29